# EUROPEAN PATENT APPLICATION

(11) **EP 4 421 630 A1**
(43) Date of publication of application: **28.08.2024**
(21) Application number: 23870358.1
(22) Date of filing: 14.09.2023
(51) Int. Cl.: G06F 9/451

(54) **WINDOW DISPLAY METHOD AND ELECTRONIC DEVICE**

(30) Priority: 28.09.2022 CN 202211197113
(71) Applicant: Huawei Technologies Co., Ltd., Shenzhen, Guangdong 518129 (CN)
(72) Inventor: WANG, Hanxiao, Shenzhen, Guangdong 518129 (CN); ZHAO, Yi, Shenzhen, Guangdong 518129 (CN)
(74) Representative: Körber, Martin Hans
(86) International application number: PCT/CN2023/118769
(87) International publication number: WO 2024/067122

(57) **Abstract**

This application provides a window display method and an electronic device. The method includes: displaying a first interface, where the first interface includes a first window and a first control of a browser, and the first window is used to display a first web page; receiving a first operation for the first control on the first interface; and displaying a second interface, where the second interface includes a second window of the browser and all or a part of the first window, the second window is used to display a second web page, and the second web page is a preset web page or a web page related to the first web page. According to this application, another window can be quickly invoked when the first window is displayed, so that a user can conveniently and quickly use a plurality of windows at the same time.

## Description

This application claims priority to Chinese Patent Application No. 202211197113.6, filed with the China National Intellectual Property Administration on September 28, 2022, and entitled "WINDOW DISPLAY METHOD AND ELECTRONIC DEVICE", which is incorporated herein by reference in its entirety.

### TECHNICAL FIELD

This application relates to the field of computer technologies, and in particular, to a window display method and an electronic device.

### BACKGROUND

When using a browser of an electronic device, a user may view content, for example, a web page by using a currently displayed window. If the user views content by using another window, the user needs to first enter a multi-window mode of the browser, and then selects the another window in the mode. User operations are complex, especially in a case in which the user needs to frequently switch between two windows. For example, the user opens English literature in a window 1, opens a dictionary tool in a window 2, and needs to frequently switch between the window 1 and the window 2 to query words in the English literature.

### SUMMARY

This application discloses a window display method and an electronic device, so that another window can be quickly invoked when a current window is displayed, and a user can conveniently and quickly use a plurality of windows at the same time.

According to a first aspect, an embodiment of this application provides a window display method, where the method includes: displaying a first interface, where the first interface includes a first window and a first control of a browser, and the first window is used to display a first web page; receiving a first operation for the first control on the first interface; and displaying a second interface, where the second interface includes a second window of the browser and all or a part of the first window, the second window is used to display a second web page, and the second web page is a preset web page or a web page related to the first web page.

In some examples, the second interface further includes the first control, the second window is associated with the first control, the second window is adjacent to the first control, and a display location of the first control on the first interface is different from a display location of the first control on the second interface.

In some examples, when displaying the first interface, the electronic device runs the second window in the background. In some other examples, the electronic device creates and runs the second window in response to the first operation.

In some examples, the first operation is a drag operation.

In the foregoing method, the electronic device may newly add the first control, and when displaying the first window, the electronic device may quickly call, based on a user operation for the first control, the second window related to the first control, and display the original first window. The user does not need to frequently switch between the two windows by using a multi-window mode of the browser, and can use the two windows at the same time by performing the simple and convenient first operation. In addition, display content of the newly called second window may be preset, or may be related to display content of the first window. This meets different user requirements in different scenarios and improves user experience.

In an implementation, the second interface further includes the first control, the first control on the first interface is displayed on a first location, the first control on the second interface is displayed on a second location, and in a process in which the first control moves from the first location to the second location, an area of the second window increases.

In some examples, the first location is an edge of a display of the electronic device.

In the foregoing method, in a process of calling the second window, a display area of the second window may gradually increase as the first control moves, so that the user experiences an operation effect of "dragging out the second window hidden outside the display by dragging the first control", thereby improving user experience.

In an implementation, the second interface includes the second window and the part of the first window, and the method further includes: receiving a second operation for the first window on the second interface; displaying a third interface, where the third interface includes all of the first window and a part of the second window; receiving a third operation for the second window on the third interface; and displaying the second interface.

In some examples, the method further includes: updating, in response to an operation for the first window on the third interface, web page content displayed on the first window; and displaying, in response to an operation for the second window on the third interface, the part of the first window and all of the second window that are obtained after the web page content is updated.

In the foregoing method, the user may quickly switch between, by using the second operation, windows that display all content on a user interface, and can view and/or operate all content on the first window without closing the second window. Subsequently, the user may further quickly switch to a previous display mode (that is, displaying the part of the first window and all of the second window), so that the user can conveniently and quickly use the two windows at the same time, thereby improving user experience.

In an implementation, the second interface includes all of the first window and the second window, and the first window and the second window are displayed on split screens on the second interface.

In some examples, the electronic device is a device configured with a foldable screen. In some examples, the electronic device is a tablet computer.

In the foregoing method, after the second window is quickly called, the electronic device may display all of the first window and all of the second window, so that the user can browse all content of the current two windows at the same time, thereby improving browsing experience.

In an implementation, the second interface further includes the first control, and the method further includes: receiving a fourth operation for the first control on the second interface; and displaying a fourth interface, where the fourth interface includes the first window, the second window, and the first control, the display location of the first control on the second interface is different from a display location of the first control on the fourth interface, and a display area of the second window on the second interface is different from a display area of the second window on the fourth interface.

In some examples, the fourth operation is the drag operation.

In the foregoing method, the electronic device may quickly adjust the display area of the second window in response to the fourth operation for the first control, so that more abundant and convenient window functions are provided for the user, and user experience is improved.

In an implementation, the second interface further includes the first control, and the method further includes: receiving a fifth operation for the first control on the second interface; and displaying a fifth interface, where the fifth interface includes the second window but does not include the first window.

In some examples, when displaying the fifth interface, the electronic device runs the first window in the background.

In some examples, the fifth operation includes dragging the first control to the edge of the display of the electronic device, the fifth interface further includes the second control, the second control on the fifth interface is displayed at the edge of the display, and the second control is associated with the first window.

In some examples, the displaying a fifth interface includes: in response to the fifth operation, displaying a third control, where the third control is associated with the second window; receiving a sixth operation for the third control; and displaying the fifth interface.

In the foregoing method, in response to the fifth operation for the first control, the electronic device may display the second window in full screen, or may be understood as hiding the first window, so that the user can quickly switch a window displayed in full screen by using a simple and convenient operation, thereby improving user experience. In addition, there are various types of the fifth operation, and different requirements of the user in different scenarios can be met.

In an implementation, the fifth interface further includes the second control, the second control is associated with the first window, and the method further includes: receiving a seventh operation for the second control on the fifth interface; and displaying a sixth interface, where the sixth interface includes the first window and all or the part of the second window.

In the foregoing method, when displaying the second window in full screen, the electronic device may also quickly call the first window based on the seventh operation for the second control, thereby further improving convenience of using the first window and the second window by the user at the same time, and improving user experience.

In an implementation, the method further includes: receiving an eighth operation for the first control on the second interface; and displaying the first interface.

In the foregoing method, in response to the eighth operation for the first control, the electronic device may display the first window in full screen, or may be understood as hiding the second window, so that the user can quickly switch a window displayed in full screen by using a simple and convenient operation, thereby improving user experience.

In an implementation, the method further includes: displaying a seventh interface, receiving a ninth operation for the first interface, where the first interface includes first information; and displaying a seventh interface, where the seventh interface includes a third window of the browser and all or the part of the first window, the third window is used to display a third web page, and the third web page is a web page related to the first information.

In some examples, the third web page includes a result obtained through searching by using the first information as a keyword; the third web page includes a result obtained by translating the first information; a website address of the third web page is a website address corresponding to the first information; the third web page includes commodity information related to the first information, or the third web page includes information related to the first location; and the first location is determined based on the first information.

In some examples, the ninth operation is an operation for the first information.

In the foregoing method, the electronic device may quickly call the third window based on the ninth operation for the first window, and display the original first window at the same time. The third window is related to the first information on the first window. The user does not need to frequently switch between the two windows by using the multi-window mode of the browser, and can use the two related windows at the same time by using only the simple and convenient ninth operation, thereby greatly improving user experience.

In an implementation, the method further includes: receiving an operation for the first window on the seventh interface, and displaying an eighth interface, where the eighth interface includes all of the first window and a part of the third window.

In the foregoing method, the user may quickly switch between the windows that display all content on the user interface, and can view and/or operate all content on the first window without closing the third window. It may be understood that the third window and the first window may be operated independently, thereby further improving convenience of using the first window and the third window at the same time by the user.

In an implementation, before the displaying a first interface, the method further includes: receiving a tenth operation for a setting interface of the browser; and in response to the tenth operation, determining the second web page displayed on the second window.

In the foregoing method, display content of the second window that can be quickly called by the user by using the first control may be set by the user, to meet a personalized requirement of the user.

According to a second aspect, this application provides an electronic device, including a transceiver, a processor, and a memory, where the memory is configured to store a computer program, and the processor invokes the computer program to perform the window display method in any possible implementation of any one of the foregoing aspects.

According to a third aspect, this application provides a computer storage medium, where the computer storage medium stores a computer program, and when the computer program is executed by a processor, the window display method in any possible implementation of any one of the foregoing aspects is implemented.

According to a fourth aspect, this application provides a computer program product, where when the computer program product runs on an electronic device, the electronic device is enabled to perform the window display method in any possible implementation of any one of the foregoing aspects.

According to a fifth aspect, this application provides an electronic device, where the electronic device includes the method or the apparatus described in any implementation of this application. The electronic device is, for example, a chip.

### BRIEF DESCRIPTION OF DRAWINGS

The following describes the accompanying drawings used in this application.
FIG. 1 is a schematic diagram of a hardware structure of an electronic device according to this application;
FIG. 2 is a schematic diagram of a software structure of an electronic device according to this application;
FIG. 3A is a schematic diagram of a user interface embodiment according to this application;
FIG. 3B is a schematic diagram of another user interface embodiment according to this application;
FIG. 4A(A) to FIG. 4A(C) are schematic diagrams of another user interface embodiment according to this application;
FIG. 4B(A) to FIG. 4B(C) are schematic diagrams of another user interface embodiment according to this application;
FIG. 5(A) and FIG. 5(B) are schematic diagrams of another user interface embodiment according to this application;
FIG. 6(A) to FIG. 6(C) are schematic diagrams of another user interface embodiment according to this application;
FIG. 7(A) to FIG. 7(C) are schematic diagrams of another user interface embodiment according to this application;
FIG. 8(A) and FIG. 8(B) are schematic diagrams of another user interface embodiment according to this application;
FIG. 9(A) to FIG. 9(C) are schematic diagrams of another user interface embodiment according to this application;
FIG. 10(A) and FIG. 10(B) are schematic diagrams of another user interface embodiment according to this application;
FIG. 11(A) and FIG. 11(B) are schematic diagrams of another user interface embodiment according to this application;
FIG. 12(A) and FIG. 12(B) are schematic diagrams of another user interface embodiment according to this application;
FIG. 13 is a schematic flowchart of a window display method according to this application; and
FIG. 14 is a schematic flowchart of a window display method according to this application.

### DESCRIPTION OF EMBODIMENTS

The following describes technical solutions of embodiments in this application with reference to accompanying drawings. In the descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

When using a browser of an electronic device, a user may view content, for example, a web page by using a currently displayed window. If the user wants to view the content by using another window, the user may use the following two manners:
Manner 1: Enter a multi-window mode of the browser, and then select the another window in this mode. User operations are complex.
Manner 2: The user may touch and hold a link in the currently displayed window to trigger to open a new window whose website is the link. In this case, the currently displayed window may also be referred to as an old window. Although the two windows may be displayed at the same time, the user can only operate the new window. If the user wants to operate the old window, the user needs to close the new window. In addition, after closing the new window, if the user wants to view the new window again, triggering needs to be performed again. Switching between the two windows is complex, and is inconvenient for the user.

This application provides a window display method, applied to an electronic device. When displaying a window 1 of an application 1, the electronic device may quickly open a window 2 (which may also be referred to as calling a window 2) of the application 1 based on a user gesture. A manner of calling the window 2 is simple and convenient. In addition, the electronic device may quickly switch between the window 1 and the window 2 based on a user operation, and the user may normally operate to switch to a window in the foreground (which may be referred to as a foreground window for short). The electronic device may further quickly adjust a size of an area of the window 2 on a display based on the user operation, for example, display the window 2 in full screen, not display the window 2, or partially display the window 2. This application resolves a pain point problem of browsing two windows at the same time by the user, effectively meets a convenience requirement of the user, and improves user experience.

The electronic device may run at least one window of the application 1, and one (that is, the foregoing foreground window) of the at least one window is visible and interactive to the user. In some examples, the electronic device may display all foreground windows. In an implementation, the at least one window further includes one or more background windows, and the background window is non-interactive to the user. In some examples, the electronic device may display some background windows. In some other examples, the electronic device may not display the background window. In some other examples, the electronic device may display all background windows. The following embodiment is described by using an example in which the electronic device displays all foreground windows, and does not display the background window or displays some background windows.

A touch operation in this application may include, but is not limited to, a plurality of forms such as clicking, double-clicking, touching and holding, touching and holding with a single finger, touching and holding with a plurality of fingers, sliding with a single finger, sliding with a plurality of fingers, and sliding with a knuckle. The touch operation in a sliding form may be referred to as a slide operation for short. The slide operation is, for example, but is not limited to, sliding left or right, sliding up or down, sliding to a specific location 1, or sliding based on a specific track. A track of the slide operation is not limited in this application. In an implementation, the touch operation may be performed at a specific location 2 on the electronic device. The specific location 2 may be located on a display of the electronic device, for example, a location of a control such as an icon or an edge of the display. Alternatively, the specific location 2 may be located at another location such as a side or the back of the electronic device, for example, a location of a button such as a volume button or a power button. The specific location 1 or the specific location 2 is preset by the electronic device, or is determined by the electronic device in response to the user operation. The specific track is preset by the electronic device, or is determined by the electronic device in response to the user operation.

In this application, the electronic device may be a mobile phone, a tablet computer, a handheld computer, a desktop computer, a laptop computer, an ultra-mobile personal computer (ultra-mobile personal computer, UMPC), a netbook, a cellular phone, a personal digital assistant (personal digital assistant, PDA), a smart home device like a smart television, a smart camera, or a smart speaker, a wearable device like a smart band, a smart watch, or smart glasses, or an extended reality (extended reality, XR) device like augmented reality (augmented reality, AR), virtual reality (virtual reality, VR), or mixed reality (mixed reality, MR), a vehicle-mounted device, or a smart city device. A specific type of the electronic device is not specially limited in embodiments of this application.

The following describes an example electronic device 100 provided in embodiments of this application.

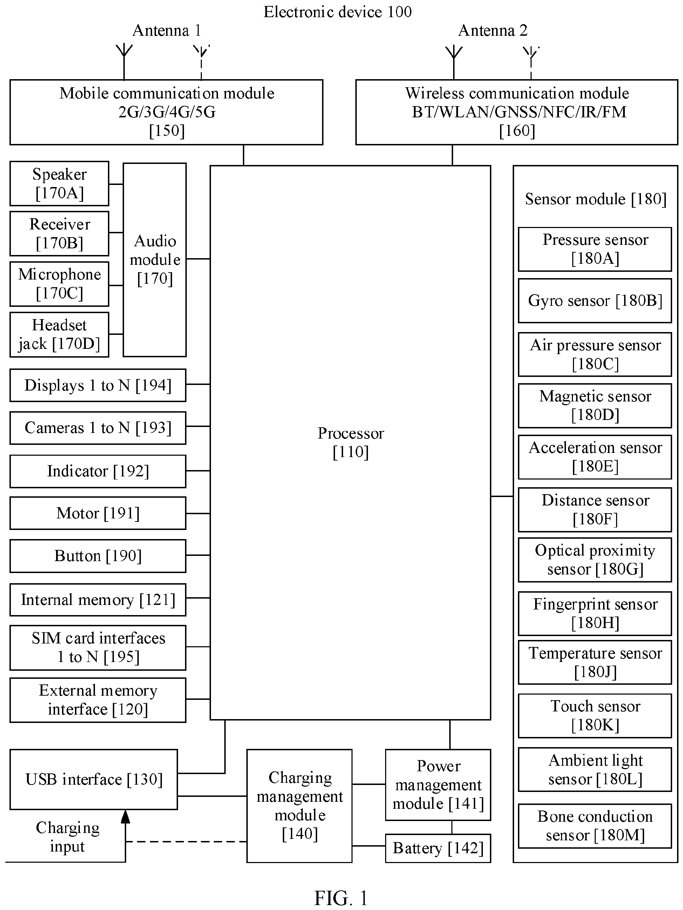

FIG. 1 is an example of a schematic diagram of a hardware structure of an electronic device 100.

It should be understood that the electronic device 100 shown in FIG. 1 is merely an example, and the electronic device 100 may have more or fewer components than those shown in FIG. 1, or may combine two or more components, or may have different component configurations. Various components shown in FIG. 1 may be implemented in hardware including one or more signal processing and/or application-specific integrated circuits, software, or a combination of hardware and software.

As shown in FIG. 1, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction fetching and instruction execution.

A memory may be further disposed in the processor 110, and is configured to store instructions and data. In an implementation, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In an implementation, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive charging input from a charger. The power management module 141 is configured to connect the battery 142, the charging management module 140, and the processor 110. The power management module 141 receives input from the battery 142 and/or the charging management module 140, and supplies power to the processor 110, the internal memory 121, the display 194, the camera 193, the wireless communication module 160, and the like.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may also be multiplexed to improve antenna utilization. For example, the antenna 1 may be multiplexed as a diversity antenna of a wireless local area network. In other embodiments, the antenna may be used in combination with a tuning switch.

The mobile communication module 150 may provide a wireless communication solution that is applied to the electronic device 100 and that includes 2G, 3G, 4G, 5G, 6G and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may amplify a signal modulated by the modem processor, and convert the signal into the electromagnetic wave for radiation through the antenna 1. In an implementation, at least some functional modules in the mobile communication module 150 may be disposed in the processor 110. In an implementation, at least some function modules of the mobile communication module 150 and at least some modules of the processor 110 may be disposed in a same component.

The modem processor may include a modulator and a demodulator. The modulator is configured to modulate a to-be-sent low-frequency baseband signal into a medium-high-frequency signal. The demodulator is configured to demodulate the received electromagnetic wave signal into a low-frequency baseband signal. Then, the demodulator transmits the demodulated low-frequency baseband signal to the baseband processor for processing. The low-frequency baseband signal is processed by the baseband processor and then transferred to the application processor. The application processor outputs a sound signal by using an audio device (not limited to the speaker 170A, the receiver 170B, and the like), or displays an image or a video by using the display 194. In an implementation, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives the electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into the electromagnetic wave for radiation through the antenna 2.

In an implementation, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), the BT, the GNSS, the WLAN, the NFC, the FM, the IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation systems, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display the image, the video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In an implementation, the electronic device 100 may include one or N displays 194, where N is a positive integer greater than 1.

The electronic device 100 may implement a photographing function by using the ISP, the camera 193, the video codec, the GPU, the display 194, the application processor, and the like.

The ISP is configured to process data fed back by the camera 193. For example, during photographing, a shutter is pressed, light is transferred to a camera photosensitive element through a lens, an optical signal is converted into an electrical signal, and the camera photosensitive element transmits the electrical signal to the ISP for processing, to convert the electrical signal into an image visible to a naked eye. The ISP may further perform algorithm optimization on noise, brightness, and color of the image. The ISP may further optimize parameters such as exposure and a color temperature of a photographing scenario. In an implementation, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In an implementation, the electronic device 100 may include one or N cameras 193, where N is a positive integer greater than 1.

The external memory interface 120 may be configured to connect to an external memory card, for example, a micro SD card, to expand a storage capability of the electronic device 100.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in a memory disposed in the processor, to perform various function applications of the electronic device 100 and data processing.

The electronic device 100 may implement audio functions such as music playing and recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In an implementation, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C.

The headset jack 170D is configured to connect to a wired headset.

The pressure sensor 180A is configured to sense a pressure signal, and can convert the pressure signal into an electrical signal. In an implementation, the pressure sensor 180A may be disposed on the display 194. There are a plurality of types of pressure sensors 180A, like a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In an implementation, touch operations that are performed on a same touch location but have different touch operation intensity may correspond to different operation instructions. For example, when a touch operation whose touch operation intensity is less than a first pressure threshold is performed on a messages application icon, an instruction for viewing an SMS message is performed. When a touch operation whose touch operation intensity is greater than or equal to the first pressure threshold is performed on the messages application icon, an instruction for creating a new SMS message is performed.

The gyro sensor 180B may be configured to determine a moving posture of the electronic device 100. In an implementation, angular velocities of the electronic device 100 around three axes (which are x, y, and z axes) may be determined by using the gyro sensor 180B.

The barometric pressure sensor 180C is configured to measure barometric pressure.

The magnetic sensor 180D includes a Hall sensor. The electronic device 100 may detect opening and closing of a flip cover by using the magnetic sensor 180D.

The acceleration sensor 180E may detect accelerations in various directions (usually on three axes) of the electronic device 100.

The distance sensor 180F is configured to measure a distance.

The optical proximity sensor 180G may include, for example, a light-emitting diode (LED) and an optical detector, for example, a photoelectric diode. The light-emitting diode may be an infrared light-emitting diode. The electronic device 100 emits infrared light by using the light-emitting diode. The electronic device 100 detects infrared reflected light from a nearby object through the photoelectric diode. When sufficient reflected light is detected, it may be determined that there is an object near the electronic device 100. When insufficient reflected light is detected, the electronic device 100 may determine that there is no object near the electronic device 100.

The ambient light sensor 180L is configured to sense ambient light brightness.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of a touch event. Visual output related to the touch operation may be provided through the display 194. In some other embodiments, the touch sensor 180K may also be disposed on a surface of the electronic device 100 at a location different from that of the display 194.

The bone conduction sensor 180M may obtain a vibration signal.

The button 190 includes a power button, a volume button, and the like.

The motor 191 may generate a vibration prompt.

The indicator 192 may be an indicator light, and may be configured to indicate a charging status and a power change, or may be configured to indicate a message, a missed call, a notification, and the like.

The SIM card interface 195 is configured to connect to a SIM card.

A software system of the electronic device 100 may use a layered architecture, an event-driven architecture, a microkernel architecture, a micro service architecture, or a cloud architecture. For example, the software system of the layered architecture may be an Android (Android) system, or may be a Harmony (Harmony) operating system (operating system, OS), or another software system. In embodiments of this application, an Android system with a layered architecture is used as an example to describe a software structure of the electronic device 100.

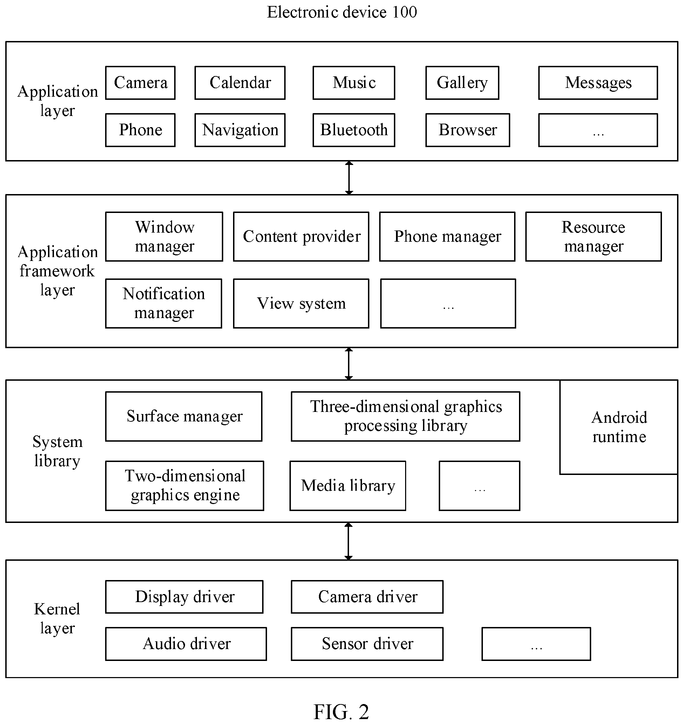

FIG. 2 is an example of a schematic diagram of a software structure of the electronic device 100.

In a layered architecture, software is divided into several layers, and each layer has a clear role and task. The layers communicate with each other through a software interface. In an implementation, the Android system is divided into four layers: an application layer, an application framework layer, an Android runtime (Android runtime) and system library, and a kernel layer from top to bottom.

The application layer may include a series of application packages.

As shown in FIG. 2, the application package may include applications like Camera, Calendar, Music, Gallery, Messages, Phone, Navigation, Bluetooth, and Browser. In this application, the application package may also be replaced with software in another form like an applet or an atomic service.

The application framework layer provides an application programming interface (application programming interface, API) and a programming framework for applications at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and bookmarks, an address book, and the like.

The view system includes visual controls like a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides, for the application, various resources like a localized character string, an icon, an image, a layout file, and a video file.

The notification manager enables the application to display notification information in the status bar, and may be configured to convey a notification-like message, which may automatically disappear after a short stay without user interaction. For example, the notification manager is configured to notify download completion, give a message notification, and the like. The notification manager may alternatively be a notification that appears in a top status bar of the system in a form of a graph or a scroll bar text, for example, a notification of an application that is run in the background, or may be a notification that appears on the screen in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of an operation process of software and hardware of the electronic device 100 with reference to a scenario in which the browser application is started.

When the touch sensor 180K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. For example, the touch operation is a touch click operation, and a control corresponding to the click operation is a control of a browser application icon. The browser application invokes an interface of the application framework layer to start the browser application, and then invokes the kernel layer to control a display driver, to display a foreground window of the browser application by using the display 194.

The following describes an application scenario in an embodiment of this application and a user interface embodiment in the scenario.

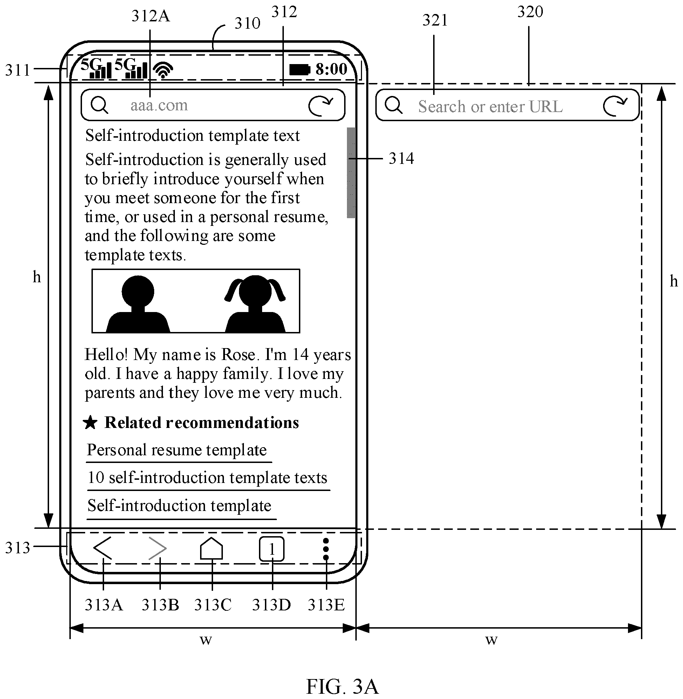

FIG. 3A is an example of a schematic diagram of a user interface of a browser application.

As shown in FIG. 3A, the electronic device 100 may display a user interface 310 of the browser application, and the user interface 310 may include a status bar 311, a window 312, and a function list 313. The status bar 311 may include a signal strength indicator of a mobile communication signal, a signal strength indicator of a Wi-Fi signal, a battery status indicator, a time indicator, and the like. A height of the window 312 is h, a width of the window 312 is w, and h and w are positive numbers. The window 312 may be used to display web page content (a title is "Self-introduction template text") whose website address is characters 312A ("aaa.com"). On the user interface 310, the window 312 is a foreground window of the browser. The function list 313 of the browser may include a control 313A used to return to a previous-level page, a control 313B used to open a next-level interface, a control 313C used to open a home page of the browser, a control 313D used to enter a multi-window mode of the browser, and a control 313E used to view more functions. The control 313D on the user interface 310 includes a number "1", which may represent that one window, that is, the window 312, runs in the multi-window mode of the browser.

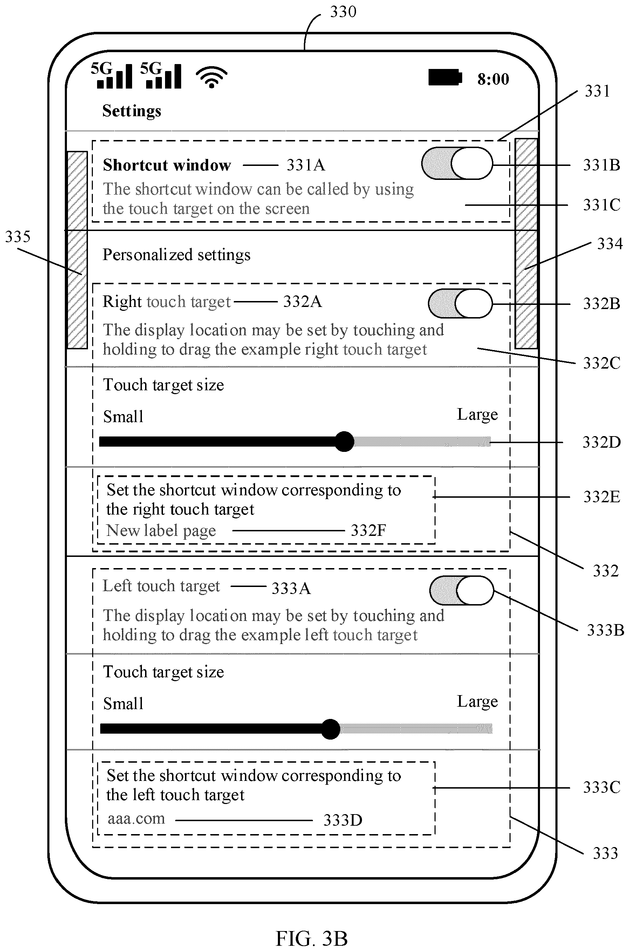

The user interface 310 further includes a touch target 314. The touch target 314 may be related to the window 320, for example, may be used to call the window 320 (that is, display the window 320 on a display) and adjust a size of a display area of the window 320. In an implementation, parameters like a size and a location of the touch target 314 may be preset by the electronic device 100. In another implementation, the parameters may alternatively be set by the electronic device 100 in response to a user operation. For a specific example, refer to FIG. 3B. Details are not described herein. In some examples, the touch target 314 may be displayed at an edge of the display of the electronic device 100. The window 320 related to the touch target 314 is a window of the browser application, and is used to display web page content. FIG. 3A is described by using an example in which a default size of the window 320 is consistent with a size of the window 312, that is, a default height and a default width of the window 320 are also: h and w, which is not limited thereto. That is, the default size of the window 320 may alternatively be larger or smaller. FIG. 3A is described by using an example in which the window 320 displays a new tab by default. For example, the window 320 may include a search box 321, and the search box 321 may be used by a user to enter a search word or a website address of a web page that the user wants to view. In some examples, the electronic device 100 may update, based on a received user operation, the web page content displayed in the window 320, and the web page content displayed in the window 320 may remain unchanged when no user operation is received. In some examples, the user may view the window 320 in the multi-window mode of the browser. In some other examples, the window 320 is a window that runs independently of the multi-window mode of the browser, and the user cannot view the window 320 in the multi-window mode of the browser.

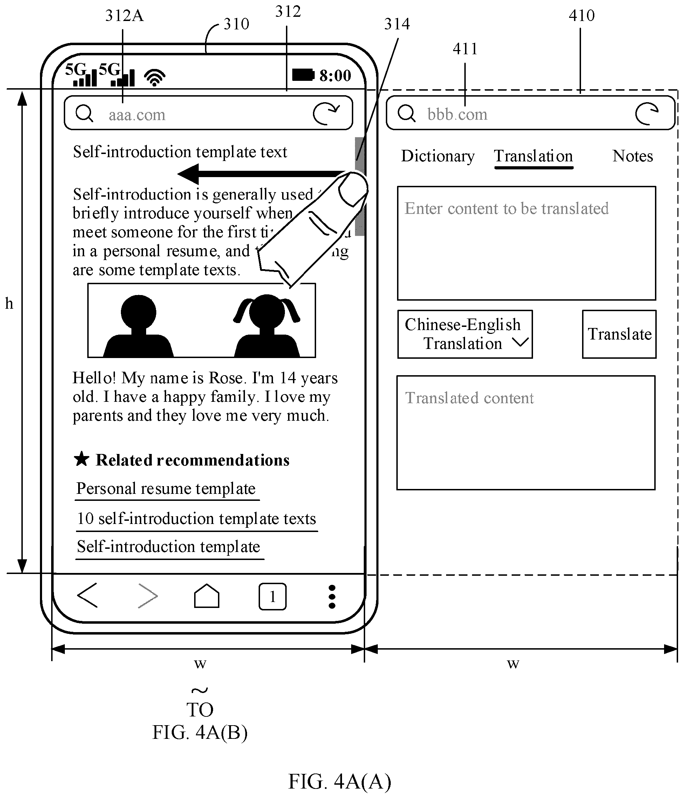

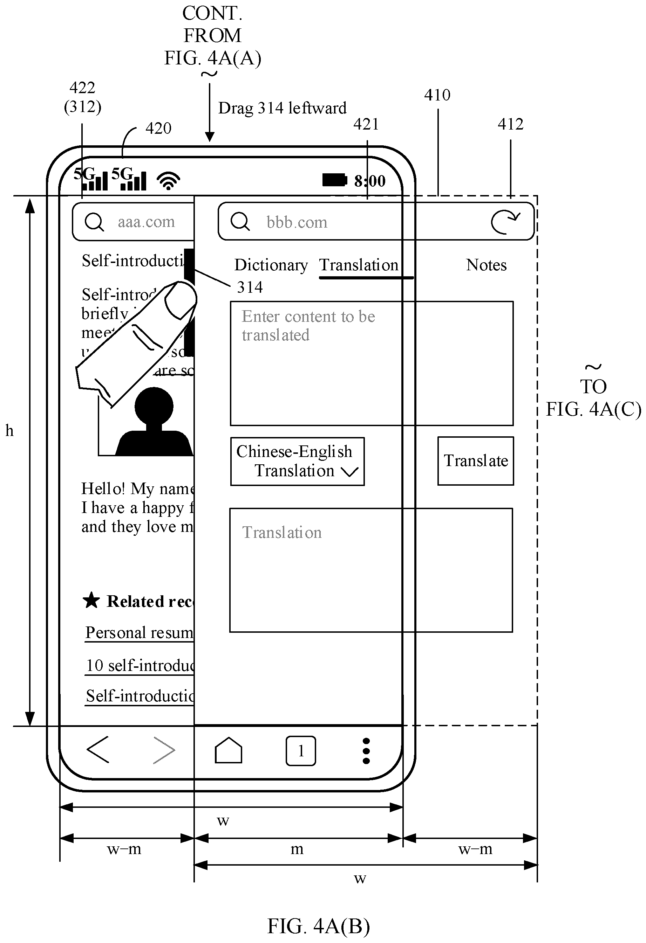

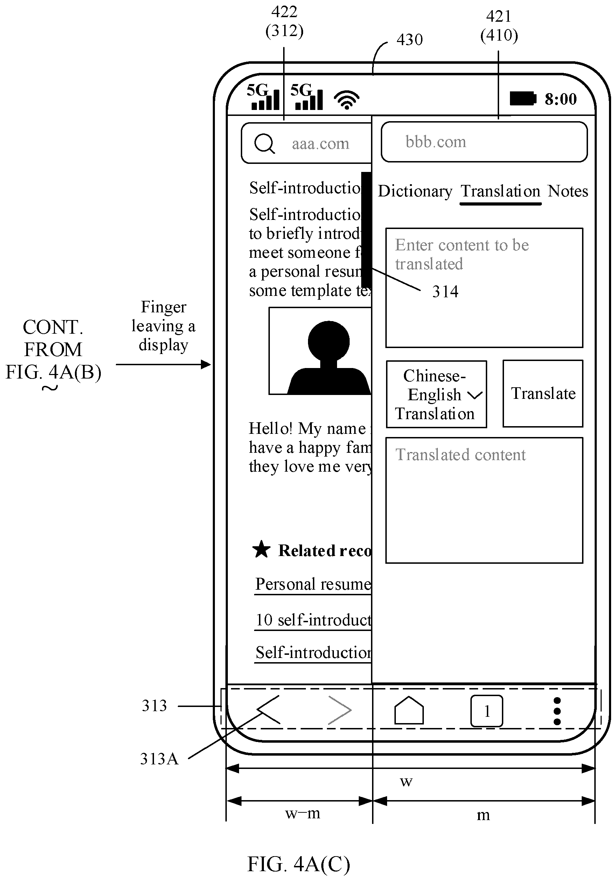

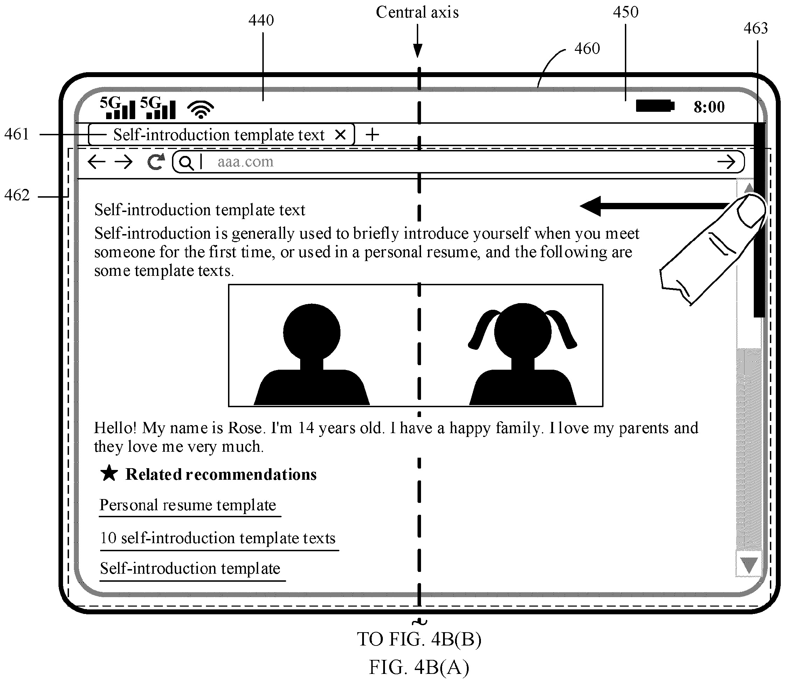

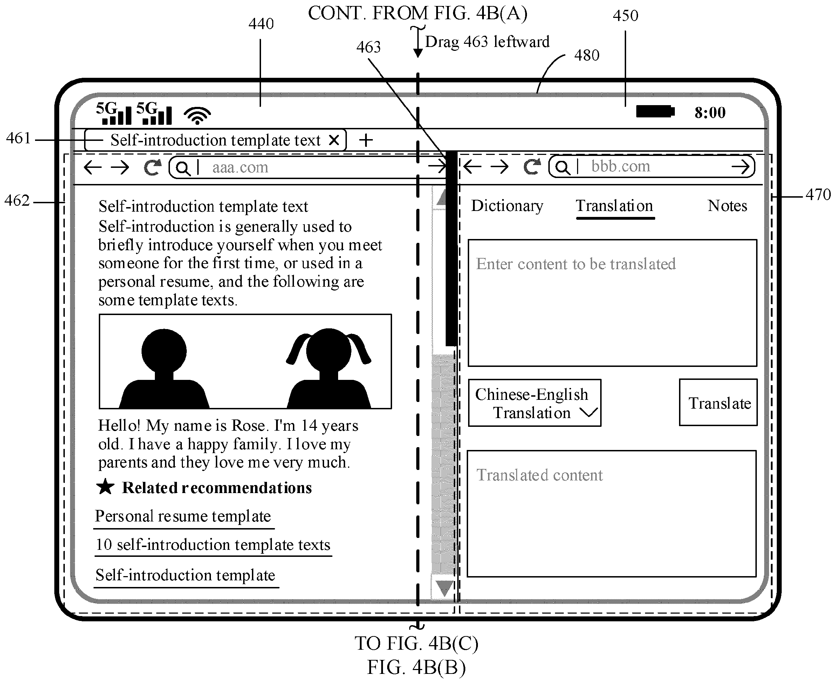

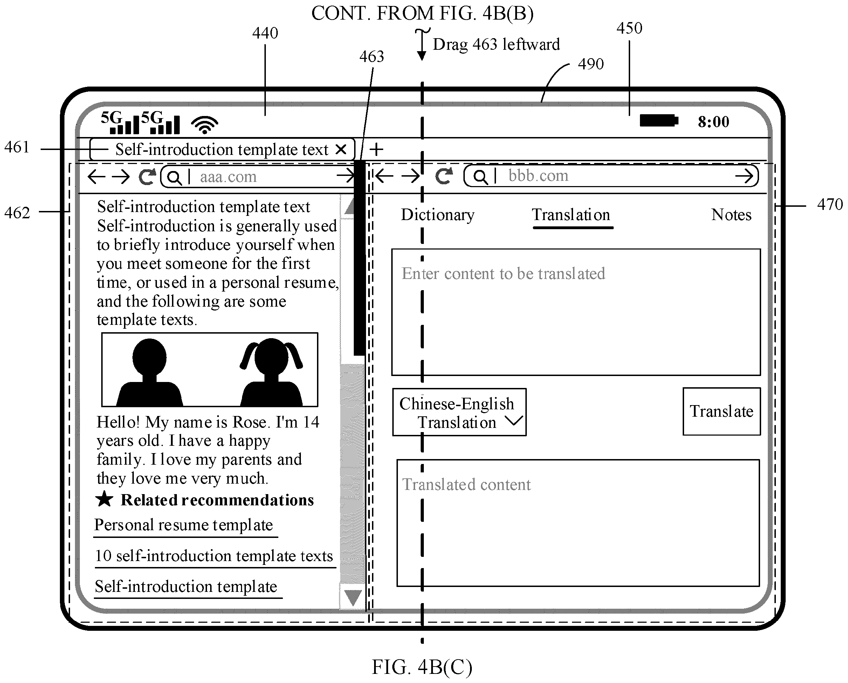

In an implementation, when the electronic device 100 displays the user interface 310, the window 320 may run in the background, and the window 320 is not displayed. It may be understood that the window 320 is created in advance. In some examples, after the browser application is started (for example, after content of the foreground window is loaded), the electronic device 100 creates the window 320, and displays the touch target 314 and run the window 320 (not displayed) in the background. In some other examples, after the browser application is started, the electronic device 100 may not display the touch target 314 first. The electronic device 100 may create the window 320 in response to a user operation (for example, a slide operation for the edge of the display) for the browser application, display the touch target 314, and run the window 320 (not displayed) in the background. This is not limited in this application. In some examples, as shown in FIG. 3A, when the electronic device 100 runs the window 320 in the background, the window 320 may be located outside the display and next to the touch target 314. This is not limited to the foregoing implementations. In another implementation, the electronic device 100 may alternatively create and display the window 320 in response to a user operation for the touch target 314 on the user interface 310. A specific example is similar to that in the following FIG. 4A(A) to FIG. 4A(C) and FIG. 4B(A) to FIG. 4B(C). Details are not described herein. This is not limited in this application.

In an implementation, the web page content displayed by default in the window 320 may be preset by the electronic device 100, for example, preset as a new tab. In another implementation, the electronic device 100 may alternatively set, in response to the user operation for the touch target 314, the web page content displayed by default in the window 320. For example, the electronic device 100 may display an input box in response to the user operation for the touch target 314, and the electronic device 100 may set a web page entered by the user based on the input box as a web page displayed by default in the window 320. In another implementation, the user may alternatively set, based on a setting interface of the browser, the web page content displayed by default in the window 320. For a specific example, refer to FIG. 3B.

FIG. 3B is an example of a schematic diagram of a setting interface.

As shown in FIG. 3B, the electronic device 100 may display a setting interface 330 of the browser application. The setting interface 330 may include function information 331. The function information 331 may include a function name 331A (including characters "Shortcut window"), an on/off control 331B, and a function description 331C (including characters "The shortcut window can be called by using the touch target on the screen"). The on/off control 331B may be used to enable or disable a function whose name is "Shortcut Window". The on/off control 331B on the setting interface 330 is in an enabled state. In this case, the setting interface 330 may further display personalized settings related to the function, for example, a setting list 332 and a setting list 333.

The setting list 332 may include a setting name 332A (including characters "Right touch target") and a setting switch 332B. The setting switch 332B may be used to enable or disable the right touch target. When the switch 332B is in the enabled state, the setting interface 330 may further display an example right touch target 334. The setting list 332 further includes a setting description 332C (including characters "The display location may be set by touching and holding to drag the example right touch target") of the display location of the right touch target. In some examples, the electronic device 100 may receive a touch operation for the right touch target 334. For example, the touch operation includes a touch and hold operation and a drag operation. The electronic device 100 may update the display location of the right touch target 334 in response to the touch operation. The setting list 332 further includes a setting slider 332D for a display size of the right touch target. The setting list 332 further includes a setting bar 332E of display content of a shortcut window corresponding to the right touch target. In some examples, the electronic device 100 may display a plurality of pieces of web page content in response to a touch operation for the setting bar 332E, and the electronic device 100 may determine, in response to a touch operation for web page content 1 in the plurality of pieces of web page content, that content displayed by default in the shortcut window corresponding to the right touch target is the web page content 1. In this case, the setting bar 332E may include information of the web page content 1. For example, when the web page content 1 is a new tab, the setting bar 332E includes information 332F of the "new tab".

A description of the setting list 333 is similar to a description of the setting list 332. A difference lies in that a setting name 333A in the setting list 333 includes characters "Left touch target", that is, the setting list 333 is a setting option for the "Left touch target". When a setting switch 333B in the setting list 333 is in the enabled state, the setting interface 330 may further display an example left touch target 335. FIG. 3B is illustrated by using an example in which a setting bar 333C of display content of a shortcut window corresponding to the left touch target in the setting list 333 includes information 333D of a website "aaa.com". In some examples, the electronic device 100 may display an input box in response to a touch operation for the setting bar 333C, and the electronic device 100 may determine, based on the website "aaa.com" entered by a user based on the input box, that content displayed by default in the shortcut window corresponding to the left touch target is content of the website "aaa.com".

The following example touch operations are, for example, but are not limited to, clicking, double-clicking, touching and holding, touching and holding with a single finger, touching and holding with a plurality of fingers, sliding with a single finger (including dragging with a single finger), sliding with a plurality of fingers (including dragging with a plurality of fingers), or sliding with a knuckle.

FIG. 4A(A) to FIG. 4A(C) is an example of schematic diagrams of a window calling process.

As shown in FIG. 4A(A), the electronic device 100 may display the user interface 310 shown in FIG. 3A, and a description of the window 410 related to the touch target 314 in the user interface 310 is similar to a description of the window 320 shown in FIG. 3A. A difference lies in that the window 410 is used to display web page content (including content of a "translation" function) whose website address is characters 411 ("bbb.com"), for example, web page content displayed by default in the window 410 that is set by the user by using the setting interface of the browser application. In an implementation, the electronic device 100 may receive a touch operation for the touch target 314 on the user interface 310. In some examples, the touch operation includes dragging leftward or rightward. For example, the electronic device 100 may first receive a touch and hold operation for the touch target 314, and then receive a dragging leftward or rightward operation for the touch target 314. The electronic device 100 may update a display location of the touch target 314 in response to the touch operation, and display content of the window 410 (which may be understood as calling the window 410) on the display (it is assumed that a width is n). In some examples, a relative location of the touch target 314 and the window 410 may remain unchanged. FIG. 4A(A) to FIG. 4A(C) are illustrated by using an example in which the touch operation is dragging the touch target 314 leftward. The electronic device 100 may display, in response to the touch operation, a user interface 420 shown in FIG. 4A(B).

As shown in FIG. 4A(B), a location of the touch target 314 on the user interface 420 is located on a left side of the location of the touch target 314 on the user interface 310, and a distance is m, where m is a positive number less than w. An area 421 that has a width of m and a height of h and that is of the user interface 420 is used to display a part of content of the window 410. An area 422 that is of the user interface 420, other than the area 421, and that has a width of (w-m) and the height of h is used to display a part of content of the window 312. In some examples, the touch target 314 shown in FIG. 4A(A) is displayed at a right edge of the display, and the window 410 is located on a right side of the touch target 314 and is located outside the display (that is, is not displayed). It is assumed that after the electronic device 100 responds to the touch operation, the relative location of the touch target 314 and the window 410 remains unchanged. Therefore, the area 421 on the right side of the touch target 314 is used to display content of an area that is located on a left side in the window 410 and that has the width of m and the height of h, and content included in an area 412 that is located on a right side in the window 410 and that has the width of (w-m) and the height of h is not displayed. The area 422 that is on a left side of the area 421 and that is of the user interface 420 is used to display content included in an area that is located on a left side in the window 312 and that has the width of (w-m).

When the electronic device 100 displays the user interface 420, a finger of the user still touches the display (for example, on an area in which the touch target 314 is located). In an implementation, the electronic device 100 may adjust a display mode of the window 410 in response to a hand release operation of the user (that is, a finger of the user leaves the display, which may be understood as a part of the foregoing touch operation). For details, refer to a user interface 430 shown in FIG. 4A(C). Different from that in the user interface 420, the area 421 in the user interface 430 is used to display all content of the window 410, and a display mode is different from a display mode (for example, different font and layout) of the window 410 shown in FIG. 4A(A) and FIG. 4A(B). It may be understood that the window 410 is adjusted to a size and/or a layout adapting to the area 421 (for example, is normally displayed in the area 421).

As shown in FIG. 4A(C), the window 410 on the user interface 430 is displayed on top of the window 312, and the user may perform interaction. For example, the electronic device 100 may display, in the window 410 in response to a touch operation (for example, a click operation) for the control 313A in the function list 313, a previous-level page of a current page (a website address is "bbb.com"), or the electronic device 100 may receive content entered by the user based on an input box in the window 410. In other words, on the user interface 430, the window 410 is a foreground window.

In an implementation, after the implementation shown in FIG. 4A(A) to FIG. 4A(C), the electronic device 100 may display, in response to a touch operation for information 1 in the window 312, for example, the touch operation is the touch and hold operation, content related to the information 1 in the window 410. For example, to-be-translated content in a web page (the website address is "bbb.com") shown in the window 410 is set to the information 1, and a translation result corresponding to the information 1 is displayed on the web page shown in the window 410.

The implementation shown in FIG. 4A(A) to FIG. 4A(C) may be understood as follows: The electronic device 100 displays all of the window 410 and the part of the window 312 in response to a user operation used to call the window 410. In another implementation, the electronic device 100 displays all of the window 410 and all of the window 312 in response to the user operation used to call the window 410, for example, displays the window 410 and the window 312 on split screens. For a specific example, refer to FIG. 4B(A) to FIG. 4B(C).

FIG. 4B(A) to FIG. 4B(C) is an example of schematic diagrams of another window calling process.

FIG. 4B(A) to FIG. 4B(C) are described by using an example in which the electronic device 100 is configured with a foldable screen. As shown in FIG. 4B(A) to FIG. 4B(C), the electronic device 100 may include a display area 440 and a display area 450, and an intersection line between the display area 440 and the display area 450 may be referred to as a central axis. A physical posture of the electronic device 100 includes, for example, but is not limited to, an unfolded state, a bent state, and a folded state. When an included angle between the display area 440 and a plane on which the display area 450 is located is 180 degrees, the electronic device 100 may be in the unfolded state, that is, a state shown in FIG. 4B(A) to FIG. 4B(C). When the included angle between the display area 440 and the plane on which the display area 450 is located is less than 180 degrees and greater than 0 degrees, the electronic device 100 may be in the bent state. When the included angle between the display area 440 and the plane on which the display area 450 is located is 0 degrees, the electronic device 100 may be in the folded state (the display area 440 and the display area 450 are opposite).

As shown in FIG. 4B(A), the electronic device 100 may display a user interface 460 of the browser application. The user interface 460 may include tab information 461, a window 462 corresponding to the tab information 461, and a touch target 463. A description of the window 462 is consistent with the description of the window 312 shown in FIG. 3A, a description of the touch target 463 is similar to the description of the touch target 314 shown in FIG. 3A, and a difference lies in that the touch target 463 is related to a window 470, a description of the window 470 is consistent with the description of the window 410 shown in FIG. 4A(A). Details are not described again. In an implementation, the electronic device 100 may receive a touch operation for the touch target 463 on the user interface 460. For example, the touch operation includes dragging leftward or rightward. In FIG. 4B(A) to FIG. 4B(C), an example in which the touch operation is dragging the touch target 463 leftward is used for illustration. The electronic device 100 may display, in response to the touch operation, a user interface 480 shown in FIG. 4B(B). The user interface 480 may include all of the window 462 and all of the window 470. A proportion of areas occupied by the window 462 and the window 470 on the display of the electronic device 100 is not limited in this application, for example, 1:1 split-screen display. For example, the proportion is determined based on a moving distance of the touch operation for the touch target 463/a moving distance of the touch target 463. In FIG. 4B(B), an example in which an area occupied by the window 462 is greater than an area occupied by the window 470 is used for illustration. In some examples, a location of the touch target 463 on the user interface 480 is located on a left side of a location of the touch target 463 on the user interface 460, corresponding to the foregoing touch operation. In some examples, on the user interface 460, the touch target 463 is located at a left edge of the display, and on the user interface 480, the touch target 463 is located at a left edge of the window 470. It may be understood that a relative location of the touch target 463 and the window 470 remain unchanged.

In an implementation, the electronic device 100 may receive a touch operation for the touch target 463 on the user interface 480. For example, the touch operation includes dragging leftward or rightward. In FIG. 4B(A) to FIG. 4B(C), an example in which the touch operation is dragging the touch target 463 leftward is used for illustration. The electronic device 100 may display, in response to the touch operation, a user interface 490 shown in FIG. 4B(C). The user interface 490 is similar to the user interface 480, and a difference lies in that a proportion of areas occupied by the window 462 and the window 470 on the display of the electronic device 100 is different. In FIG. 4B(C), an example in which an area occupied by the window 462 is less than an area occupied by the window 470 is used for illustration. It may be understood that the electronic device 100 may adjust, based on the user operation, the proportion of the areas occupied by the window 462 and the window 470 on the display of the electronic device 100. An adjusted proportion is not limited in this application. For example, the window 462 may be displayed in full screen, the window 470 may be displayed in full screen, or the window 462 and the window 470 may be displayed on split screens.

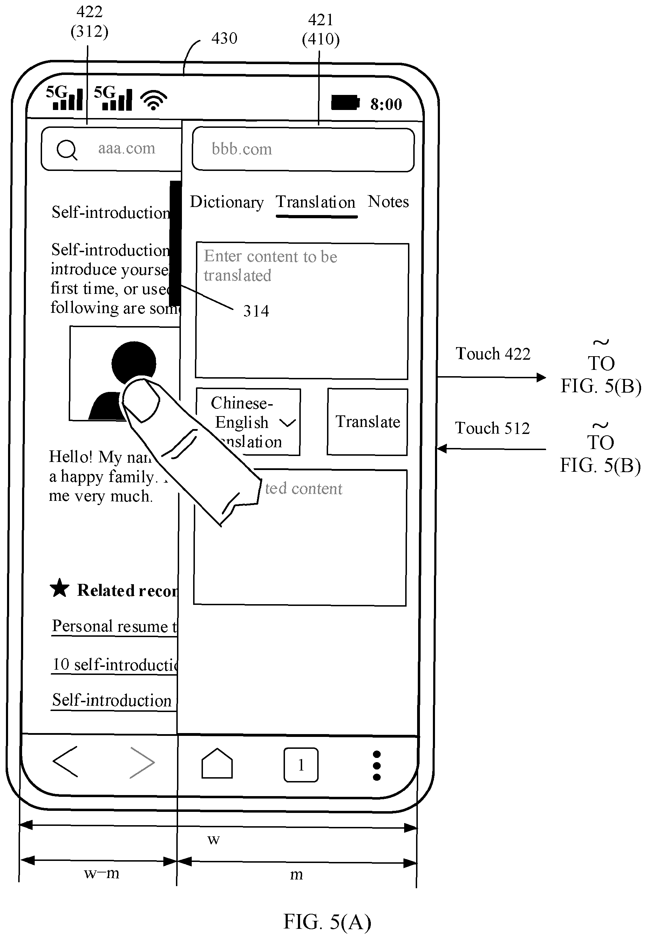

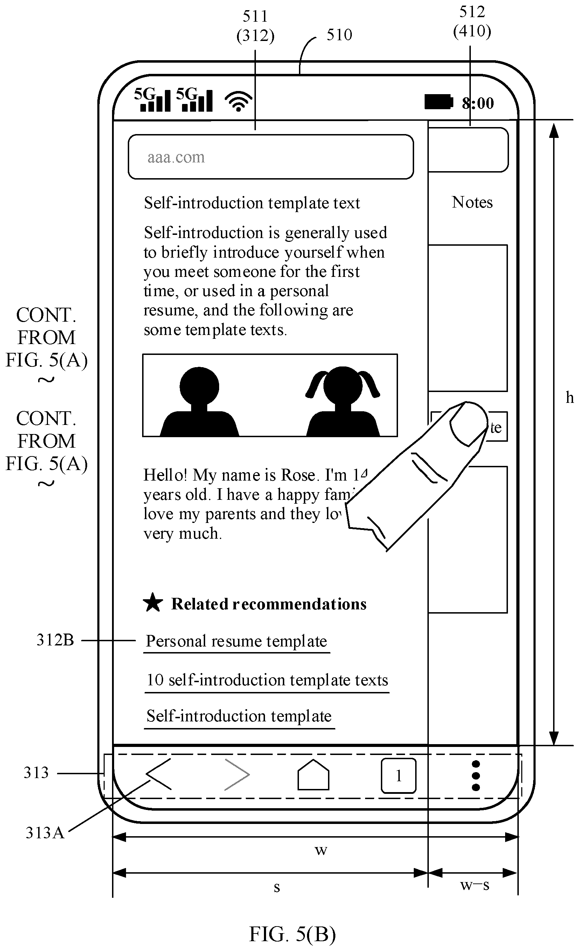

In an implementation, after the implementation shown in FIG. 4A(A) to FIG. 4A(C), the electronic device 100 may switch the foreground window in response to the user operation. For a specific example, refer to FIG. 5(A) and FIG. 5(B).

As shown in FIG. 5(A), the electronic device 100 may display the user interface 430 shown in FIG. 4A(C). The area 421 on the user interface 430 is used to display all content of the window 410, and the area 422 is used to display the part of content of the window 312. The electronic device 100 may switch the foreground window from the window 410 to the window 312 in response to the touch operation for the area 422 on the user interface 430. For example, the touch operation is a click operation or a double-click operation. For an example of an interface, refer to a user interface 510 shown in FIG. 5(B).

As shown in FIG. 5(B), the user interface 510 may include an area 511 whose width is s and height is h, and an area 512 whose width is (w-s) and height is h, where s is a positive number less than w. The area 511 may be used to display all content of the window 312, and a display mode is different from a display mode (for example, different font and layout) of the window 312 shown in FIG. 3A and FIG. 4A(A) to FIG. 4A(C). It may be understood that the window 312 is adjusted to a size and/or a layout adapting to the area 511 (for example, is normally displayed in the area 511). The area 512 may be used to display the part of content of the window 410, for example, content of an area that is located a right side in the window 410 and that has the width of (w-s), and the height of h shown in FIG. 5(A). In this case, (w-s) is a positive number less than m. The window 312 on the user interface 510 is displayed on top of the window 410, and the user may perform interaction. For example, the electronic device 100 may display, in the window 312 in response to the touch operation (for example, a click operation) for the control 313A in the function list 313, a previous-level page of a current page (a website address is "aaa.com"), or the electronic device 100 may display, in the window 312 in response to a touch operation (for example, the click operation) for a control 312B (including characters "Personal resume template") in the window 312, web page content whose website is a link corresponding to the control 312B.

In some examples, the electronic device 100 may switch the foreground window from the window 312 to the window 410 in response to the touch operation for the area 512 on the user interface 510. For example, the touch operation is the click operation or the double-click operation. For an example of the interface, refer to the user interface 430 shown in FIG. 5(A).

The implementation shown in FIG. 5(A) and FIG. 5(B) may be understood as follows: After receiving a touch operation for a window, the electronic device 100 sets the window as the foreground window, and subsequently the electronic device 100 may update display content of the window in response to the touch operation for the window. The touch operation may be understood as an activation operation. In another implementation, the user may directly operate a window without performing the activation operation. For example, after receiving a touch operation for a window, the electronic device 100 sets the window as the foreground window, and updates display content of the window. This is not limited in this application.

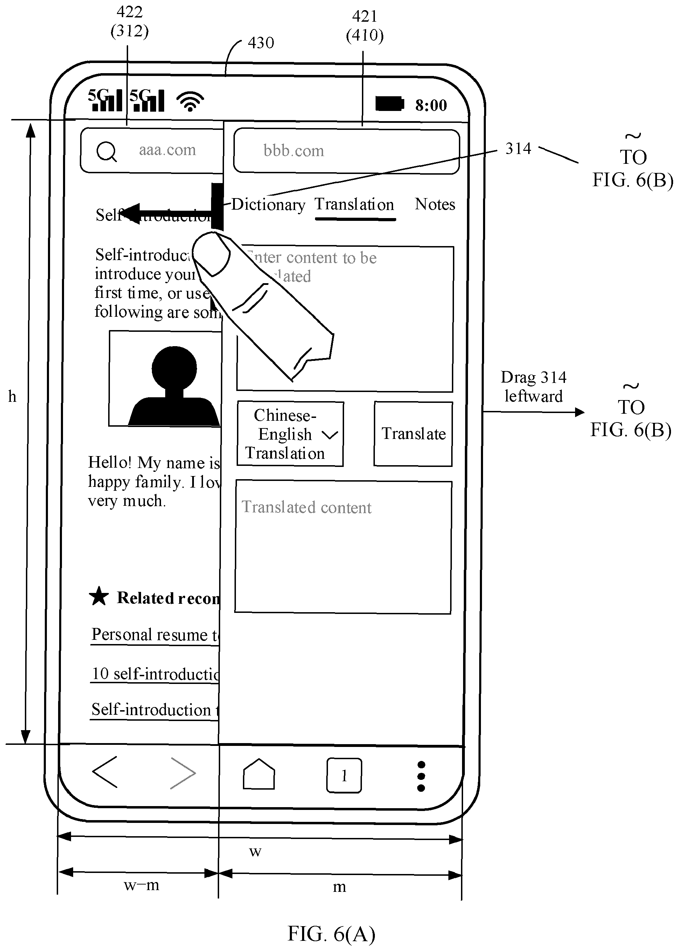

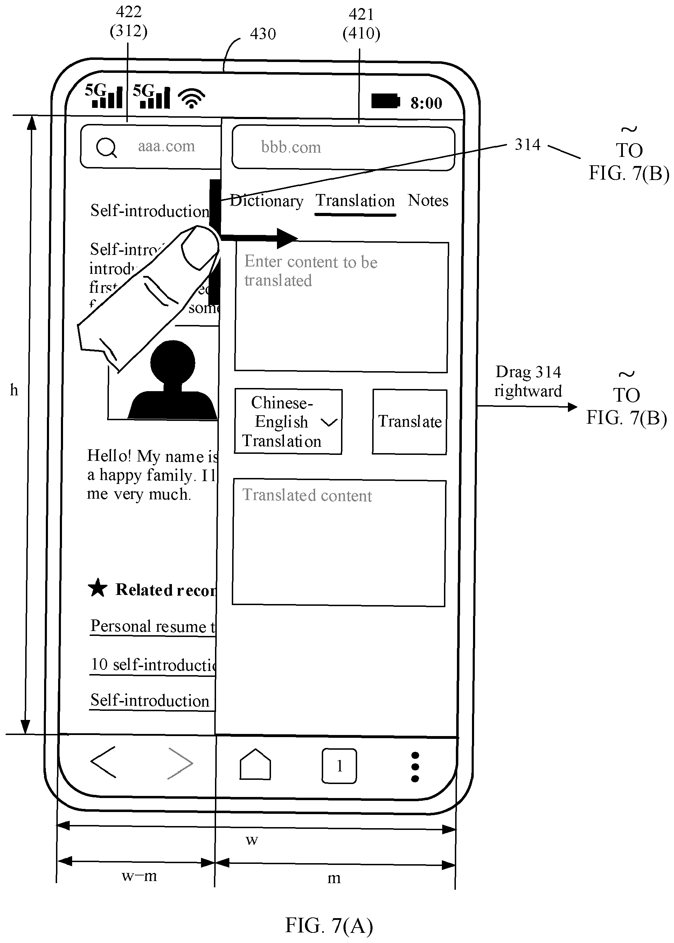

In an implementation, after the implementation shown in FIG. 4A(A) to FIG. 4A(C), the electronic device 100 may adjust a size of a display area of the window 410 in response to a user operation for the touch target 314. For a specific example, refer to FIG. 6(A) to FIG. 6(C) and FIG. 7(A) to FIG. 7(C).

FIG. 6(A) to FIG. 6(C) is an example of schematic diagrams of increasing a display area of a window.

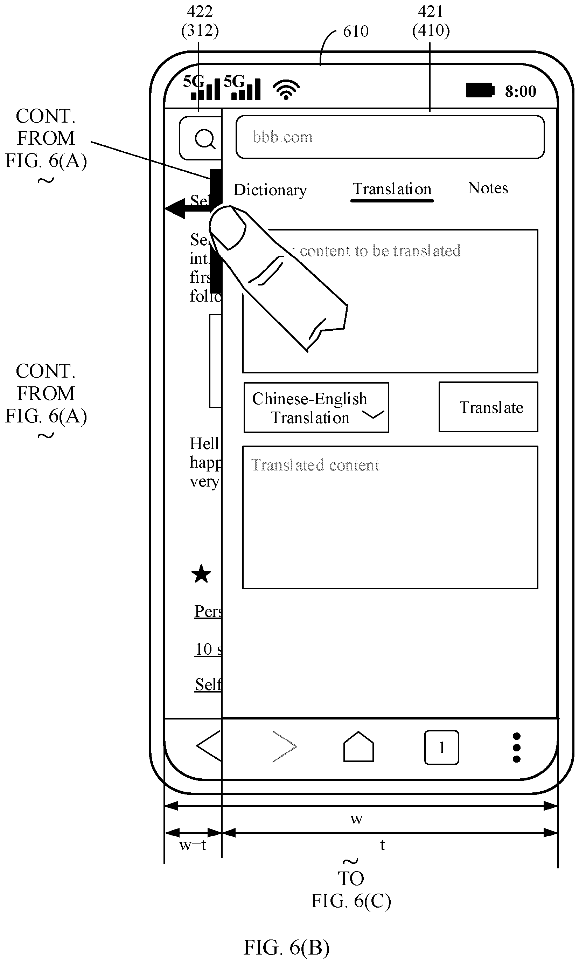

As shown in FIG. 6(A), the electronic device 100 may display the user interface 430 shown in FIG. 4A(C). The electronic device 100 may receive the touch operation for the touch target 314 on the user interface 430. In some examples, the touch operation includes dragging leftward or rightward. For example, the electronic device 100 may first receive the touch and hold operation for the touch target 314, and then receive the dragging leftward or rightward operation for the touch target 314. The electronic device 100 may update the display location of the touch target 314 in response to the touch operation, and adjust a size of the area 421. In some examples, the relative location of the touch target 314 and the window 410 may remain unchanged. FIG. 6(A) to FIG. 6(C) are illustrated by using the example in which the touch operation is dragging the touch target 314 leftward. The electronic device 100 may display, in response to the touch operation, a user interface 610 shown in FIG. 6(B).

As shown in FIG. 6(B), a location of the touch target 314 on the user interface 610 is located on a left side of the location of the touch target 314 on the user interface 430, and a distance is (t-m). A width t of the area 421 on the user interface 610 is greater than a width m of the area 421 on the user interface 430, and a height remains unchanged. It may be understood that the electronic device 100 widens, in response to the touch operation (for example, dragging the touch target 314 leftward), the area 421 of used to display the window 410 related to the touch target 314, and the window 410 is adjusted to a size and/or a layout adapting to the widened area 421. Accordingly, the width (w-t) of the area 422 on the user interface 610 is less than the width (w-m) of the area 422 on the user interface 430.

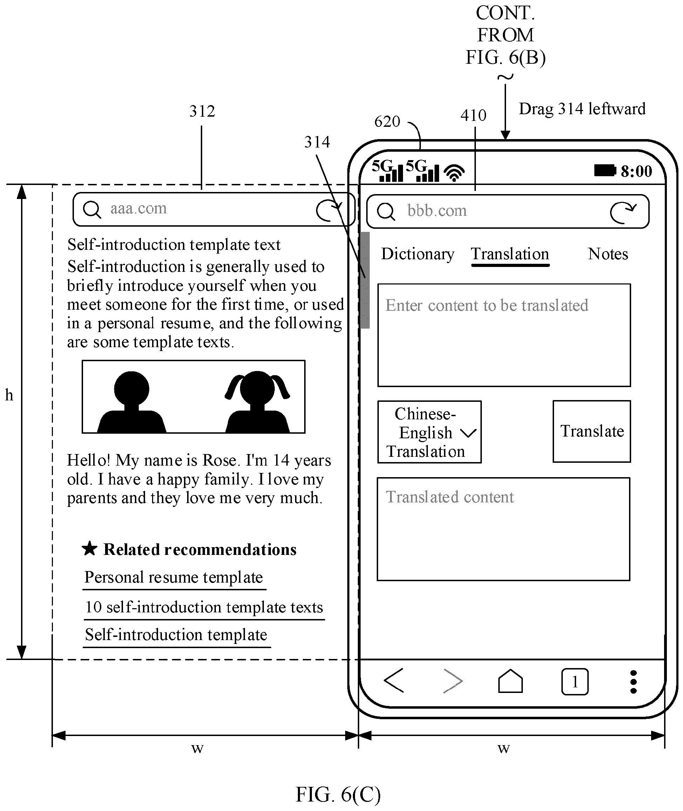

In an implementation, the electronic device 100 may receive a touch operation for the touch target 314 on the user interface 610. For example, the touch operation includes dragging leftward or rightward. In FIG. 6(A) to FIG. 6(C), an example in which the touch operation is dragging the touch target 314 leftward to the edge of the display is used for illustration. The electronic device 100 may display, in response to the touch operation, a user interface 620 shown in FIG. 6(C). The touch target 314 on the user interface 620 is located at the left edge of the display. The user interface 620 includes the window 410 whose width is w (that is, a width of the display) and height is h. It may be understood that the electronic device 100 displays, in "full screen" in response to the touch operation (for example, dragging the touch target 314 leftward to the edge of the display), the window 410 related to the touch target 314. Correspondingly, that the user interface 620 does not display the window 312 may be understood as that the electronic device 100 "hides" the window 312. In some examples, as shown in FIG. 6(C), the window 312 may be located outside the display and next to the touch target 314. In some examples, a size of the window 312 is consistent with a size of the window 410. In some examples, a window related to the touch target 314 is the window 312 that is not displayed, the touch target 314 is, for example, but is not limited to, used to call the window 312 and/or adjust a size of a display area of the window 312.

FIG. 7(A) to FIG. 7(C) is an example of schematic diagrams of reducing a display area of a window.

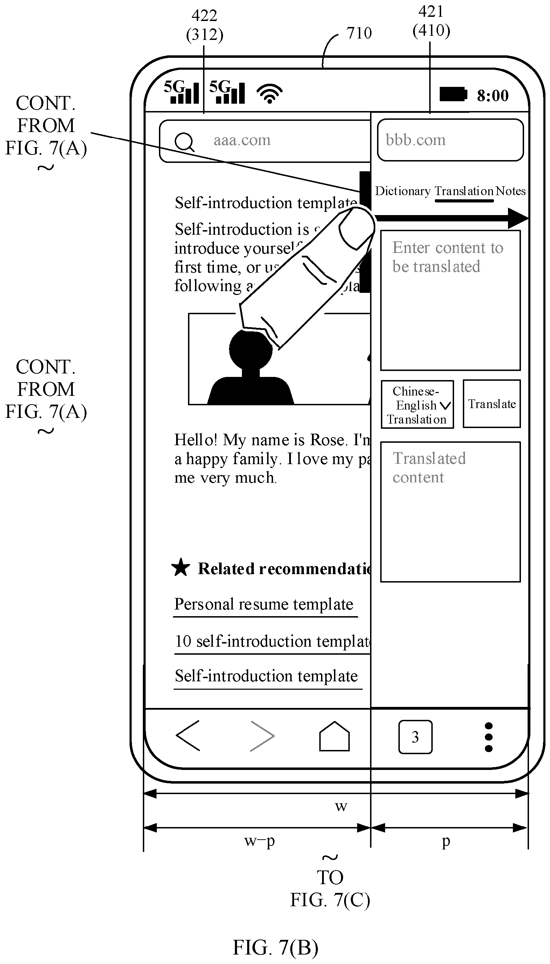

As shown in FIG. 7(A), the electronic device 100 may display the user interface 430 shown in FIG. 4A(C). The electronic device 100 may receive the touch operation for the touch target 314 on the user interface 430. In some examples, the touch operation includes dragging leftward or rightward. For example, the electronic device 100 may first receive the touch and hold operation for the touch target 314, and then receive the dragging leftward or rightward operation for the touch target 314. The electronic device 100 may update the display location of the touch target 314 in response to the touch operation, and adjust the size of the area 421. In some examples, the relative location of the touch target 314 and the window 410 may remain unchanged. FIG. 7(A) to FIG. 7(C) are illustrated by using an example in which the touch operation is dragging the touch target 314 rightward. The electronic device 100 may display, in response to the touch operation, a user interface 710 shown in FIG. 7(B).

As shown in FIG. 7(B), a location of the touch target 314 on the user interface 710 is located on a right side of the location of the touch target 314 on the user interface 430, and a distance is (m-p). A width p of the area 421 on the user interface 710 is less than the width m of the area 421 on the user interface 430, and a height remains unchanged. It may be understood that the electronic device 100 narrows, in response to the touch operation (for example, dragging the touch target 314 rightward), the area 421 used to display the window 410 related to the touch target 314, and the window 410 is adjusted to a size and/or a layout adapting to the widened area 421. Accordingly, the width (w-p) of the area 422 on the user interface 610 is less than the width (w-m) of the area 422 on the user interface 430.

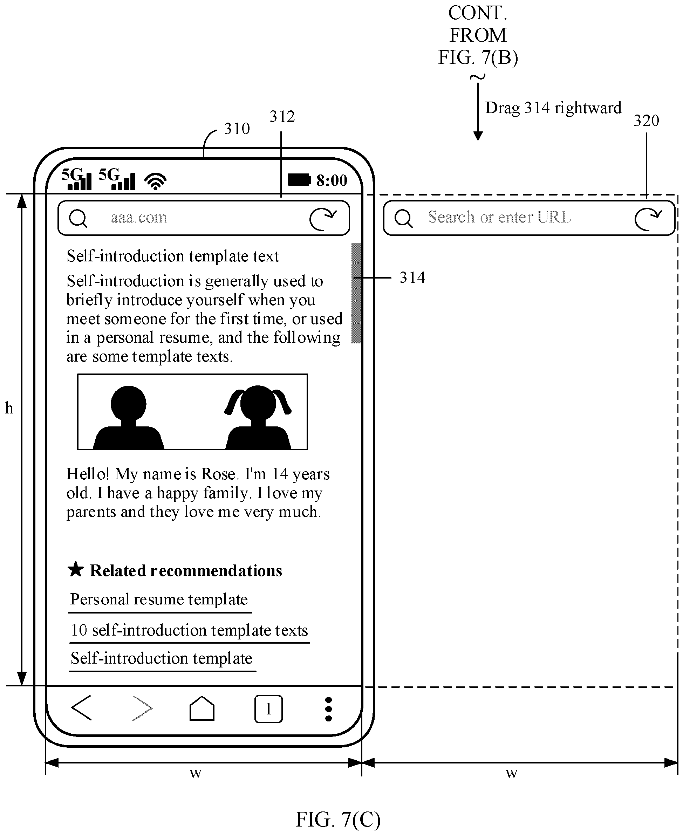

In an implementation, the electronic device 100 may receive the touch operation for the touch target 314 on the user interface 710. For example, the touch operation includes dragging leftward or rightward. In FIG. 7(A) to FIG. 7(C), an example in which the touch operation is dragging the touch target 314 rightward to the edge of the display is used for illustration. The electronic device 100 may display, in response to the touch operation, the user interface 310 shown in FIG. 7(C). For specific descriptions of the user interface 310 and the window 320, refer to descriptions of FIG. 3A. Details are not described again. It may be understood that the electronic device 100 "hides", in response to the touch operation (for example, dragging the touch target 314 rightward to the edge of the display), the window 410 related to the touch target 314. Correspondingly, the electronic device 100 displays the window 312 in "full screen".

This is not limited to the foregoing examples. In some other examples, a distance between an initial location and an updated location of the touch target 314 is different from the width of the area 421 used to display the window 410. For example, the electronic device 100 drags, in response to the touch operation for the touch target 314 (located at the edge of the display), the touch target 314 leftward or rightward for a distance m, and displays content of the window 410 in an area that is adjacent to the touch target 314 and whose width is less than m or greater than m. This is not limited in this application.

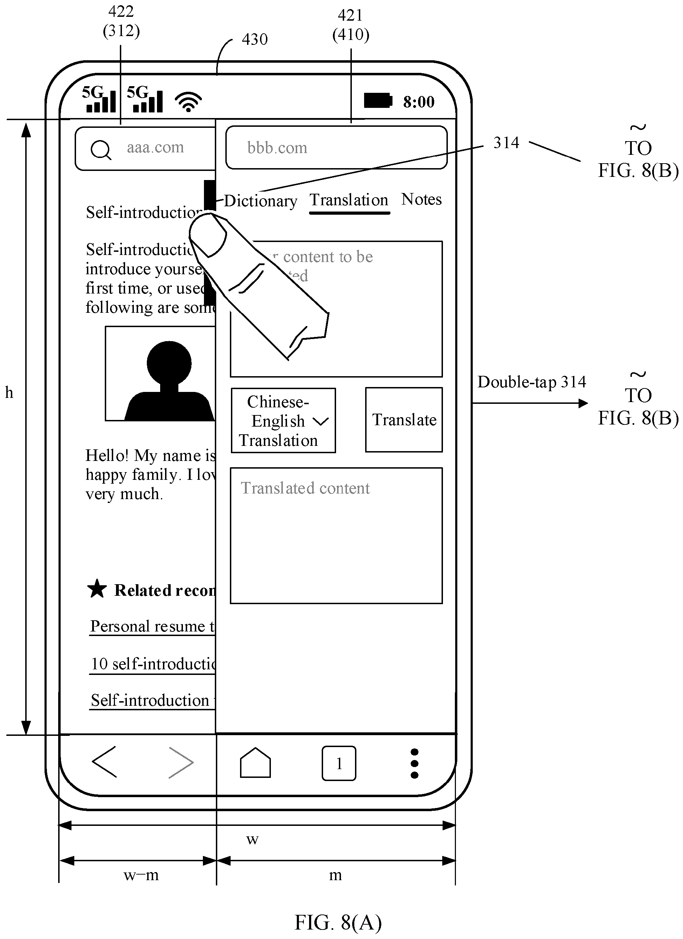

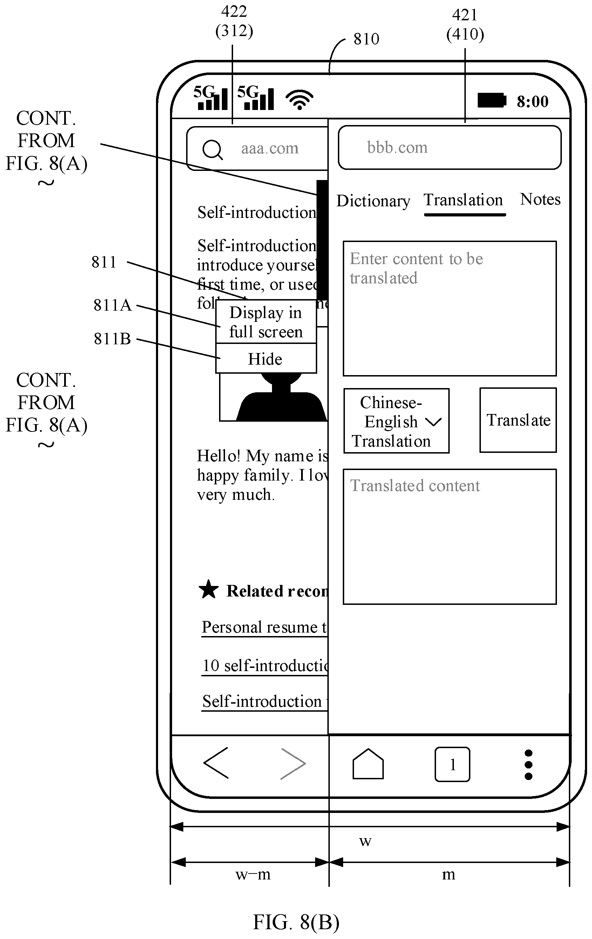

This is not limited to the implementations shown in FIG. 6(A) to FIG. 6(C) and FIG. 7(A) to FIG. 7(C). In another implementation, after the implementation shown in FIG. 4A(A) to FIG. 4A(C), the electronic device 100 may display a full-screen control and/or a hide control in response to a user operation for the touch target 314. The full-screen control is used to display the window 410 related to the touch target 314 in "full-screen", and the hide control is used to "hide" the window 410 related to the touch target 314. For a specific example, refer to FIG. 8(A) and FIG. 8(B).

As shown in FIG. 8(A), the electronic device 100 may display the user interface 430 shown in FIG. 4A(C). The electronic device 100 may receive the touch operation for the touch target 314 on the user interface 430. In some examples, the touch operation includes a click operation or a double-click operation. The electronic device 100 may display, in response to the touch operation, a user interface 810 shown in FIG. 8(B). Compared with the user interface 430 shown in FIG. 8(A), the user interface 810 shown in FIG. 8(B) further includes a function menu 811, and the function menu 811 may include a full-screen control 811A and a hide control 811B. In some examples, the electronic device 100 may display, in response to a touch operation (for example, a click operation) for the full-screen control 811A, the user interface 620 shown in FIG. 6(C). For details, refer to the description of FIG. 6(C). In some examples, the electronic device 100 may display, in response to a touch operation (for example, the click operation) for the hide control 811B, the user interface 310 shown in FIG. 7(C). For details, refer to the description of FIG. 7(C).

In the foregoing implementation, the electronic device 100 may add a display control: the touch target 314, and provide, by listening to the user operation (for example, the touch operation) for the touch target 314, the user with functions such as quickly calling a window related to the touch target 314 and adjusting a size (including "full-screen" display and "hiding") of a display area of the window related to the touch target 314, so that the user can use the window related to the touch target 314 as a tool that is "coming as called, going as indicated". In addition, in the implementation shown in FIG. 5(A) and FIG. 5(B), switching (the foreground window) may be performed between the window 312 and the window 410, and the window 312 and the window 410 can be operated independently. This brings great convenience for use of the user.

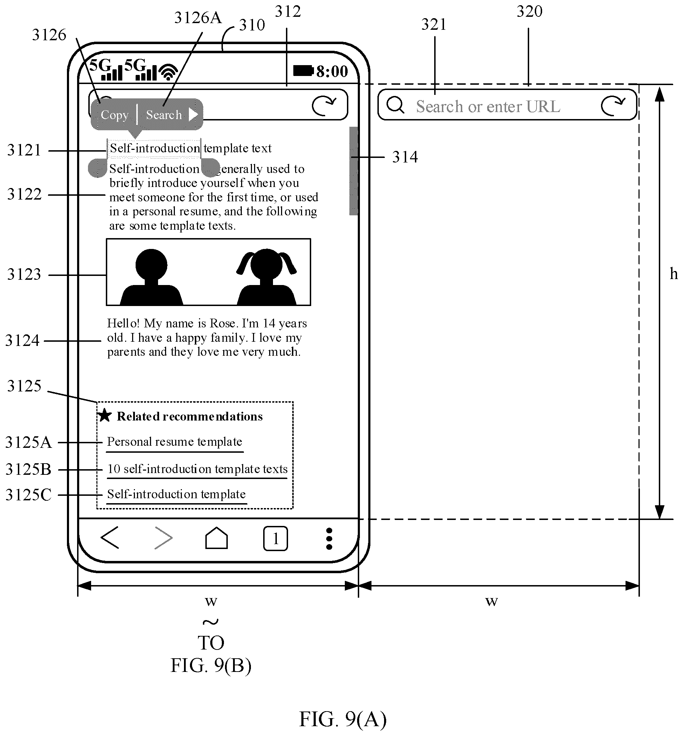

In an implementation, after the implementation shown in FIG. 3 A, the electronic device 100 may display content of the window 320 in a partial area of the display in response to the user operation for the content 1 in the window 312 shown in FIG. 3A. The window 320 is used to display web page content related to the content 1. For specific examples, refer to FIG. 9(A) to FIG. 12(B).

FIG. 9(A) to FIG. 9(C) are illustrated by using an example in which the content 1 is a text.

As shown in (A) in FIG. 9(A) to FIG. 9(C), the electronic device 100 may display the user interface 310. For descriptions of the user interface 310 and the window 320 that is of the user interface 310 and that is related to the touch target 314, refer to descriptions of the user interface 310 and the window 320 in FIG. 3A. The window 312 on the user interface 310 may include a title 3121 (including characters "Self-introduction template text"), a text 3122 (including characters "Self-introduction is generally used to briefly introduce yourself when you meet someone for the first time, or used in a personal resume, and the following are some template texts"), an image 3123, a text 3124 (including characters "Hello! My name is Rose. I'm 14 years old. I have a happy family. I love my parents and they love me very much"), and a related recommendation list 3125. The list 3125 may include a plurality of pieces of recommendation information, for example, recommendation information 3125A "Personal resume template", and recommendation information 3125B "10 self-introduction template texts" and recommendation information 3125C "Self-introduction template". Any piece of the recommendation information may be used to jump to a web page of a corresponding web page link. The electronic device 100 may display a function list 3126 in the window 312 in response to a touch operation for the characters "Self-introduction" (that is, the content 1) in the title 3121, where in some examples, the touch operation is the touch and hold operation. The function list 3126 may be related to the foregoing selected characters "Self-introduction". For example, because the selected content 1 is a text, the function list 3126 may include a copy function control, a search function control 3126A, a view more function control, and the like.

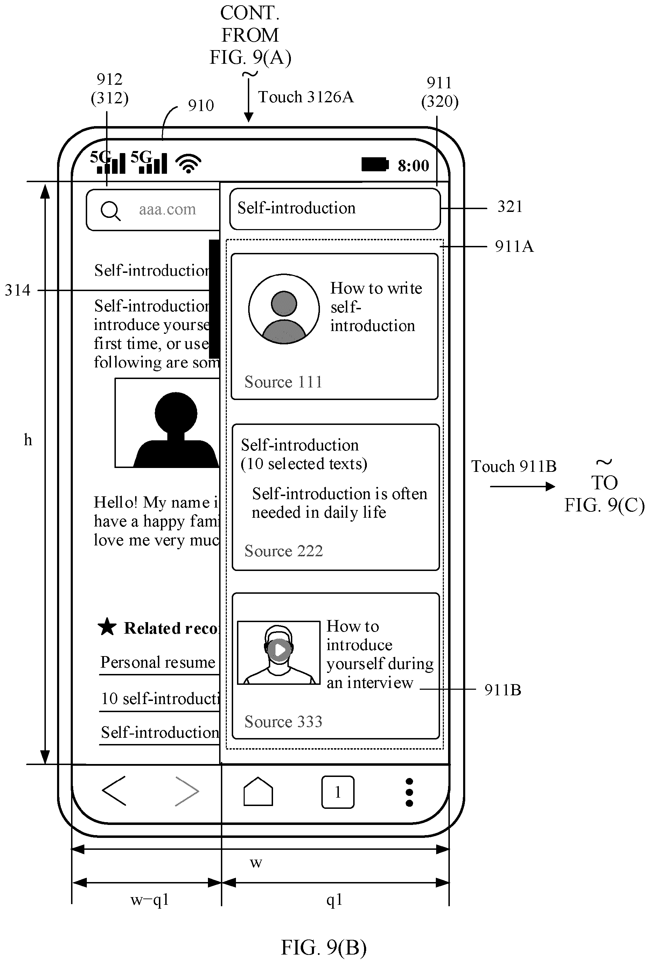

In some examples, the electronic device 100 may search, in response to a touch operation for the control 3126A, for example, the touch operation is a click operation or a double-click operation, the window 320 for the selected characters "Self-introduction". For example, the selected characters "Self-introduction" are entered in the search box 321 in the window 320, and content of the window 320 is displayed in a partial area of the display. For a specific example, refer to a user interface 910 shown in FIG. 9(B). An area 911 that has a width of q1 and a height of h and that is of the user interface 910 is used to display all content of the window 320, and an area 912 that has a width of (w-q1) and a height of h, other than the area 911, is used to display the part of content of the window 312. The search box 321 in the window 320 displayed in the area 911 includes the foregoing selected characters "Self-introduction", and is used to represent that current search words are "Self-introduction". The window 320 further includes a search list 911A, and the search list 911A may include a plurality of search results, for example, a search result 911B, related to the search words "Self-introduction". The window 320 on the user interface 910 is displayed on top of the window 312, and is interactive to the user, that is, the window 320 is the foreground window. On the user interface 910, the touch target 314 is displayed next to the window 320, and may be used to adjust the size of the display area of the window 320. A specific example is similar to that in FIG. 6(A) to FIG. 8(B). Details are not described again.

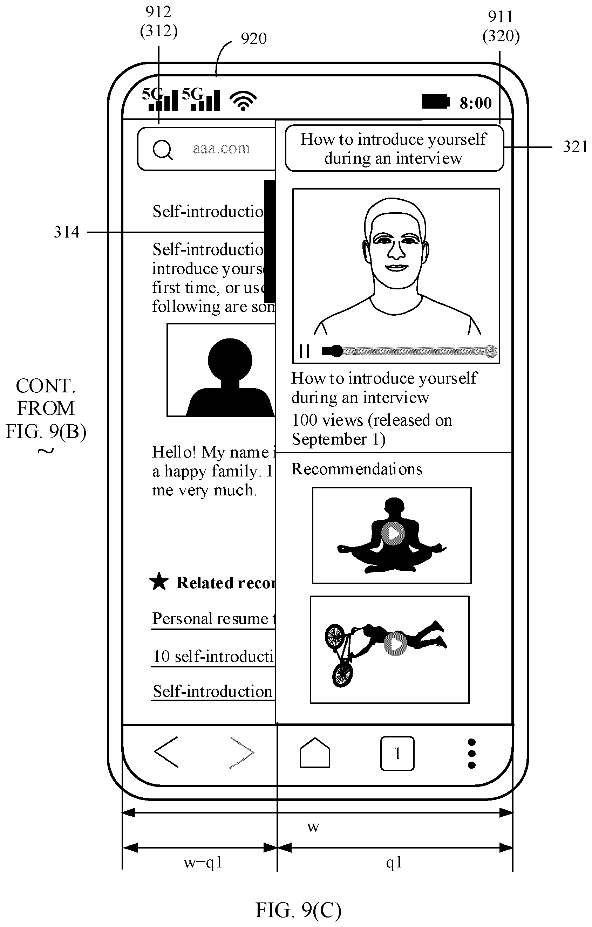

In some examples, the electronic device 100 may update web the page content displayed in the window 320 in response to a touch operation for the window 320 on the user interface 910. For example, the electronic device 100 may display, in response to a touch operation for the search result 911B, for example, the touch operation is a tap operation, a user interface 920 shown in FIG. 9(C). The user interface 920 is similar to the user interface 910. A difference lies in that content displayed in the window 320 is different, the window 320 on the user interface 920 is used to display specific content of a web page corresponding to the search result 911B, and the search box 321 in the window 320 shown on the user interface 920 includes a title "How to introduce yourself during an interview" of the web page corresponding to the search result 911B.

In some examples, after the implementation shown in FIG. 9(A) to FIG. 9(C), the electronic device 100 may display all of the window 312 and a part of the window 320 in response to a touch operation for the window 312 on the user interface 920, which may be understood as switching the foreground window from the window 320 to the window 312. For example, in this case, the electronic device 100 may update, in response to the touch operation for the window 312, the web page content displayed in the window 312. In some examples, after the foregoing process, the electronic device 100 may display the part of the window 312 and all of the window 320 in response to a touch operation for the window 320. Display content of the window 320 remains unchanged, and the window 320 on the user interface 920 is still used. In other words, the window 312 and the window 320 may be operated independently without affecting each other. Even if one window is switched to a state in which a part of content is displayed and the user cannot perform interaction, the displayed content of the window is not affected. Provided that the window is switched to a state (that is, the foreground window) in which all content is displayed and is interactive to the user, the user can continue to use the window. This greatly facilitates use of the user.

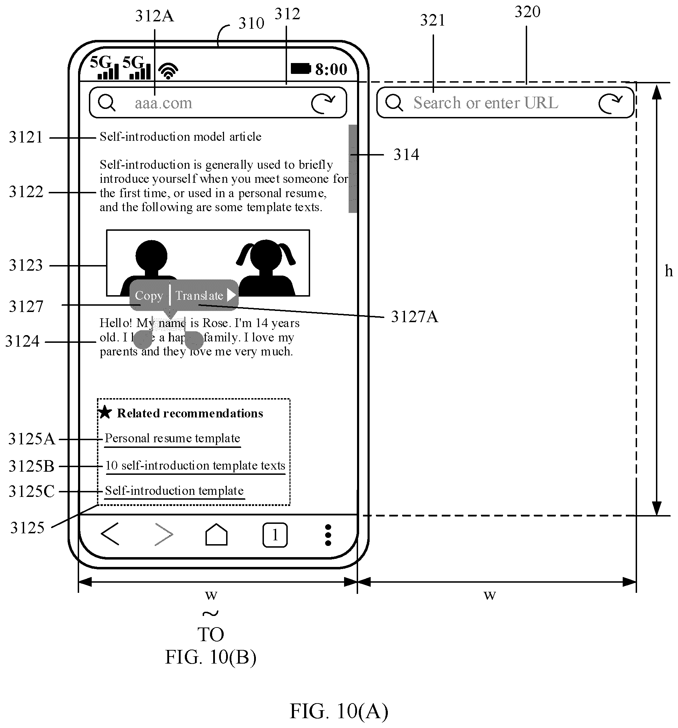

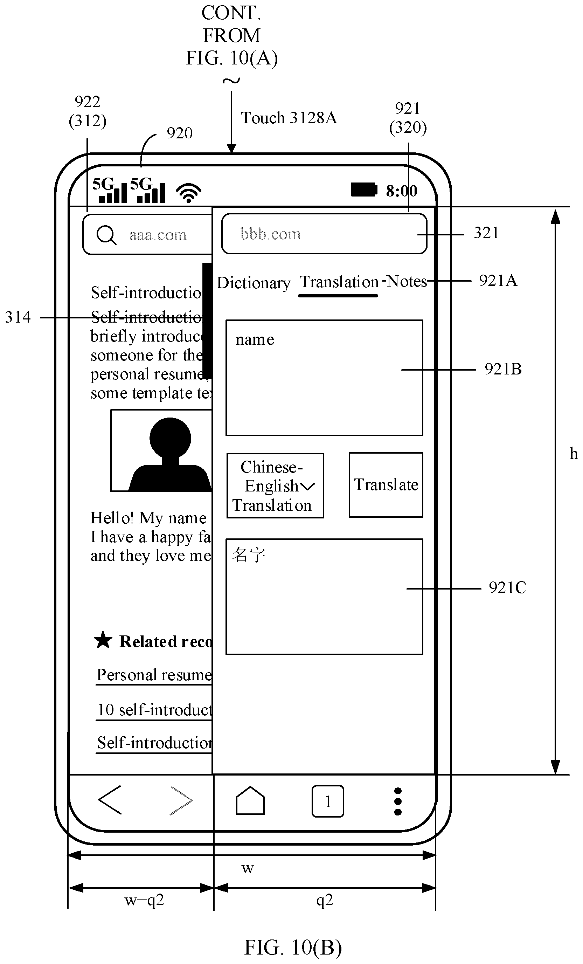

This is not limited to the case in FIG. 9(A) to FIG. 9(C) (the window 320 is used to display the search result related to the text). In some other examples, the window 320 is used to display a translation result related to the text. For a specific example, refer to FIG. 10(A) and FIG. 10(B).

As shown in FIG. 10(A), the electronic device 100 may display the user interface 310. For descriptions of the user interface 310 and the window 320 that is of the user interface 310 and that is related to the touch target 314, refer to descriptions of the user interface 310 and the window 320 in FIG. 3A and FIG. 9(A). The electronic device 100 may display a function list 3127 in the window 312 in response to a touch operation for characters "name" (that is, the content 1) included in the text 3124 in the window 312, where in some examples, the touch operation is the touch and hold operation. The function list 3127 may be related to the foregoing selected characters "name". For example, because the selected content 1 is an English text, the function list 3127 may include the copy function control, a translation function control 3127A, the view more function control, and the like.

In some examples, the electronic device 100 may display, in response to a touch operation for the control 3127A, for example, the touch operation is the click operation or the double-click operation, a translation result of the selected characters "name" in the window 320. For example, the electronic device 100 jumps to a translation web page in the window 320, and set the selected characters "name" as to-be-translated content on the translation web page to display a corresponding translation result. For a specific example, refer to the user interface 920 shown in FIG. 10(B). An area 921 that has a width of q2 and the height of h and that is of the user interface 920 is used to display all content of the window 320, and an area 922 that has a width of (w-q2) and the height of h, other than the area 921, is used to display the part of content of the window 312. The search box 321 in the window 320 displayed in the area 911 includes a website address ("bbb.com") of a translation web page, and the window 320 further includes a title 921A (including characters "translation"), an input box 921B, and a display box 921C, where the input box 921B is used to input to-be-translated content, and in this case, the foregoing selected characters "name" are displayed, and the display box 921C is used to display a translation result corresponding to the content in the input box 921B, the translation result " 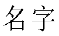 " corresponding to the selected characters "name" is displayed. The window 320 on the user interface 920 is displayed on top of the window 312, and is interactive to the user, that is, the window 320 is the foreground window. On the user interface 920, the touch target 314 is displayed next to the window 320, and may be used to adjust the size of the display area of the window 320. A specific example is similar to that in FIG. 6(A) to FIG. 8(B). Details are not described again.

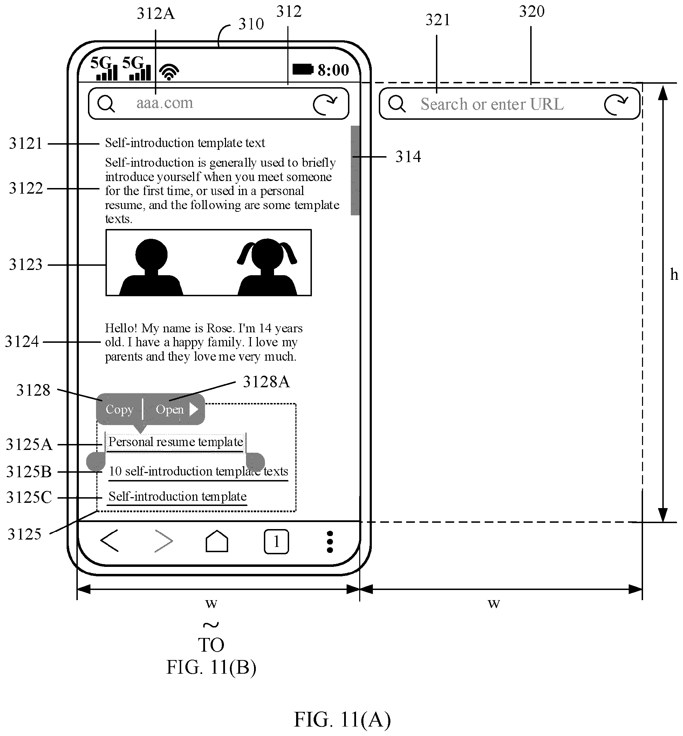

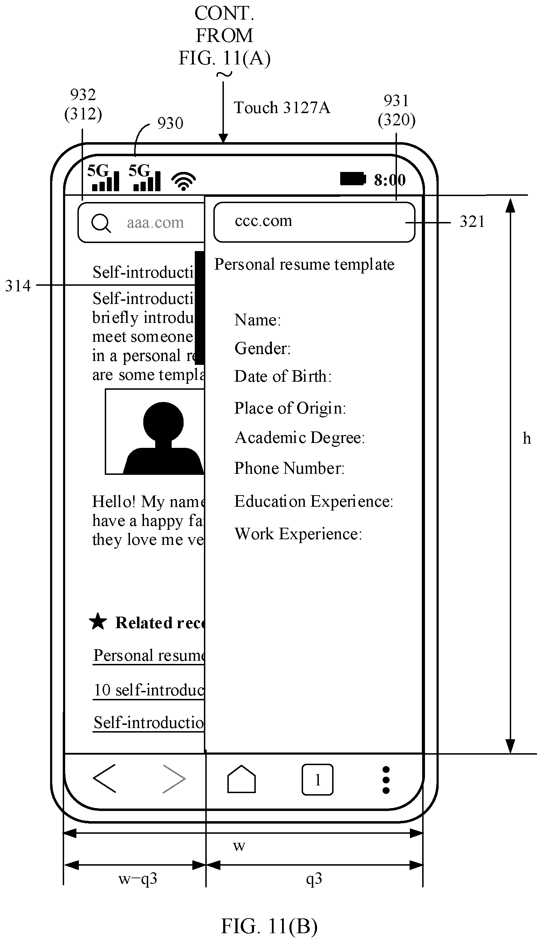

FIG. 11(A) and FIG. 11(B) are illustrated by using an example in which the foregoing content 1 is content corresponding to a web page link.

As shown in FIG. 11(A), the electronic device 100 may display the user interface 310. For descriptions of the user interface 310 and the window 320 that is of the user interface 310 and that is related to the touch target 314, refer to descriptions of the user interface 310 and the window 320 in FIG. 3A and FIG. 9(A). The electronic device 100 may display a function list 3128 in the window 312 in response to a touch operation for the recommendation information 3125A "Personal resume template" (that is, the content 1) in the window 312, where in some examples, the touch operation is the touch and hold operation. The function list 3128 may be related to the foregoing selected recommendation information 3125A "Personal resume template". For example, because the selected content 1 has a corresponding web page link, the function list 3128 may include the copy function control, an enabling function control 3128A, the view more function control, and the like.

In some examples, in response to a touch operation for the control 3128A, for example, the touch operation is the click operation or the double-click operation, the electronic device 100 may display web page content related to the selected recommendation information 3125A in the window 320, for example, the web page content of the web page link corresponding to the recommendation information 3125A, and display the content of the window 320 in a partial area of the display. For a specific example, refer to the user interface 930 shown in FIG. 11(B). An area 931 that has a width of q3 and the height of h and that is of the user interface 930 is used to display all content of the window 320, and an area 932 that has a width of (w-q3) and the height of h, other than the area 931, is used to display the part of content of the window 312. It is assumed that the web page link corresponding to the recommendation information 3125A is "ccc.com", and the window 320 is used to display the web page content of the web page link corresponding to the recommendation information 3125A, the search box 321 in the window 320 displayed in the area 931 includes the web page link "ccc.com". The window 320 on the user interface 930 is displayed on top of the window 312, and is interactive to the user, that is, the window 320 is the foreground window. On the user interface 930, the touch target 314 is displayed next to the window 320, and may be used to adjust the size of the display area of the window 320. A specific example is similar to that in FIG. 6(A) to FIG. 8(B). Details are not described again.

This is not limited to the example shown in FIG. 11(A) and FIG. 11(B). In some other examples, content corresponding to a web page link may alternatively be in another form, for example, an image 3123 on the user interface 310 shown in FIG. 11(A). This is not limited in this application.

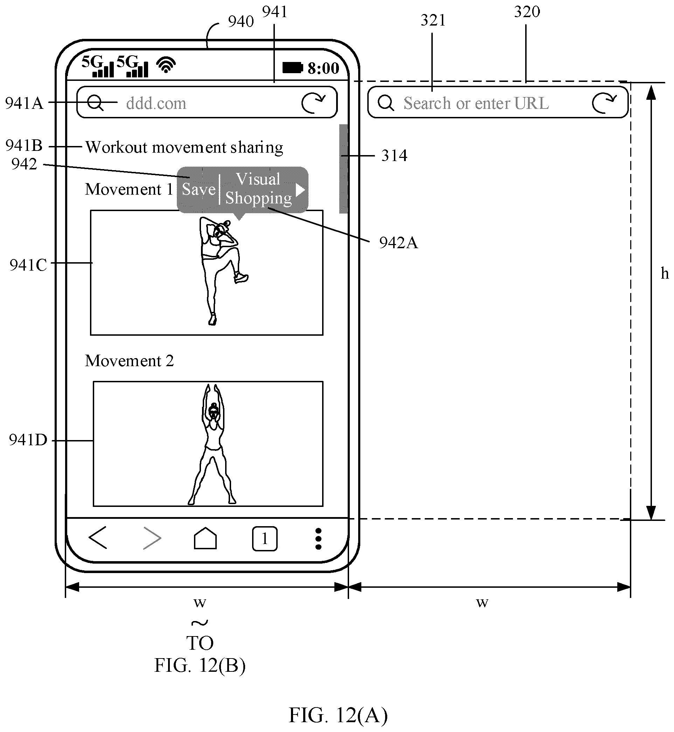

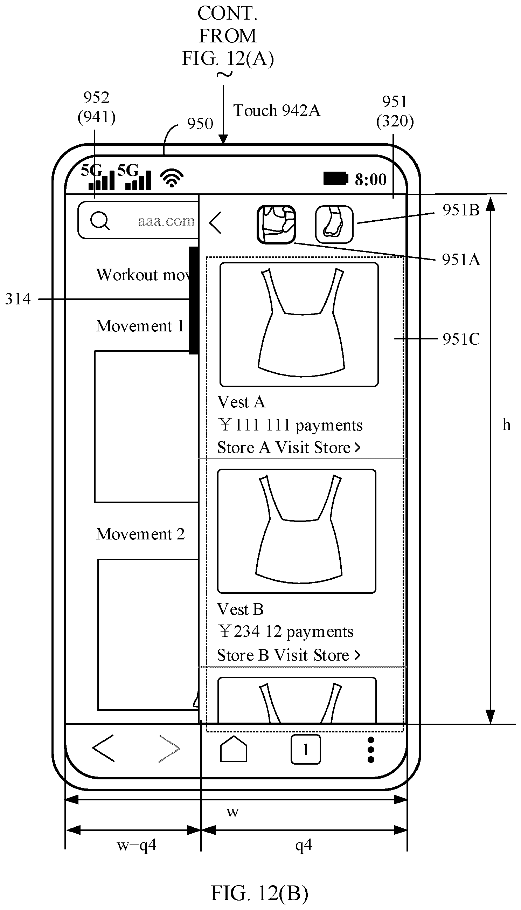

FIG. 12(A) and FIG. 12(B) is illustrated by using an example in which the content 1 is an image.

As shown in FIG. 12(A), the electronic device 100 may display a user interface 940, and the user interface 940 may include a window 941 and the touch target 314. Descriptions of the window 941 and the window 320 related to the touch target 314 are similar to the descriptions of the window 312 and the window 320 in FIG. 3A and FIG. 9(A). A difference lies in that content displayed in the window 941 and the window 312 is different. The window 941 may include a search box 941A (including a website address "ddd.com"), a title 941B (including characters "Workout movement sharing"), an image 941C, and an image 941D. The electronic device 100 may display a function list 942 in the window 312 in response to a touch operation for the image 941C (that is, the content 1) in the window 941, where in some examples, the touch operation is the touch and hold operation. The function list 942 may be related to the foregoing selected image 941C. For example, because the selected content 1 is an image, the function list 942 may include a saving function control, an image recognition function control 942A, the view more function control, and the like.

In some examples, the electronic device 100 may display, in response to a touch operation for the control 942A, for example, the touch operation is the click operation or the double-click operation, web page content related to the selected image 941C in the window 320, for example, content of a commodity obtained by recognizing the image 941C. For a specific example, refer to a user interface 950 shown in FIG. 12(B). An area 951 that has a width of q4 and the height of h and that is of the user interface 950 is used to display all content of the window 320, and an area 952 that has a width of (w-q4) and the height of h, other than the area 951, is used to display a part of content of the window 941. The window 320 may include an image 951A, an image 951B, and a commodity list 951C. The image 951A and the image 951B are obtained (for example, cropped) from the foregoing selected image 941C, and the image 951A is in a selected state, which may represent that commodities in the commodity list 951C are obtained through searching based on the image 951A. The window 320 on the user interface 950 is displayed on top of the window 941, and is interactive to the user, that is, the window 320 is the foreground window. On the user interface 950, the touch target 314 is displayed next to the window 320, and may be used to adjust the size of the display area of the window 320. A specific example is similar to that in FIG. 6(A) to FIG. 8(B). Details are not described again.

This is not limited to the example shown in FIG. 12(A) and FIG. 12(B). In some other examples, the content 1 may include location information and/or a place name. The electronic device 100 may recognize the content 1 to obtain the location information and/or the place name, and display navigation content related to the location information and/or the place name in the window 320. For example, a destination in the navigation content is the location information or the place name. In some other examples, the content 1 may include location information and/or a place name. The electronic device 100 may recognize the content 1 to obtain the location information and/or the place name, and display ticket booking content related to the location information and/or the place name in the window 320. For example, a destination of a train ticket/an air ticket in the ticket booking content is the location information or the place name. This is not limited in this application.

In an implementation, after the implementation shown in FIG. 9(A) to FIG. 9(C), FIG. 10(A) and FIG. 10(B), FIG. 11(A) and FIG. 11(B), or FIG. 12(A) and FIG. 12(B), the electronic device 100 may switch the foreground window in response to the user operation. A specific example is similar to that in FIG. 5(A) and FIG. 5(B). In some examples, after the window 320 is called, the electronic device 100 may display both the window 312 and the window 320. In some examples, when the foreground window is the window 320, the electronic device 100 may display the part of the window 312 and all of the window 320. A specific example is similar to the user interface 430 shown in FIG. 5(A). In some other examples, when the foreground window is the window 312, the electronic device 100 may display all of the window 312 and the part of the window 320. A specific example is similar to the user interface 510 shown in FIG. 5(B).

In the implementations shown in FIG. 9(A) to FIG. 12(B), the electronic device 100 may quickly call the window 320 in response to a user operation for web page content in a current window, and display, in the window 320, web page content related to the web page content, so that the user can seamlessly call the window 320 when browsing the current window to browse related content. In addition, the current window and the window 320 can be quickly switched, so that the user can conveniently and quickly browse the two windows at the same time, thereby improving user experience.

A window display method in this application is described based on the foregoing embodiments. The method may be applied to the electronic device 100 shown in FIG. 1. The method may be applied to the electronic device 100 shown in FIG. 2.

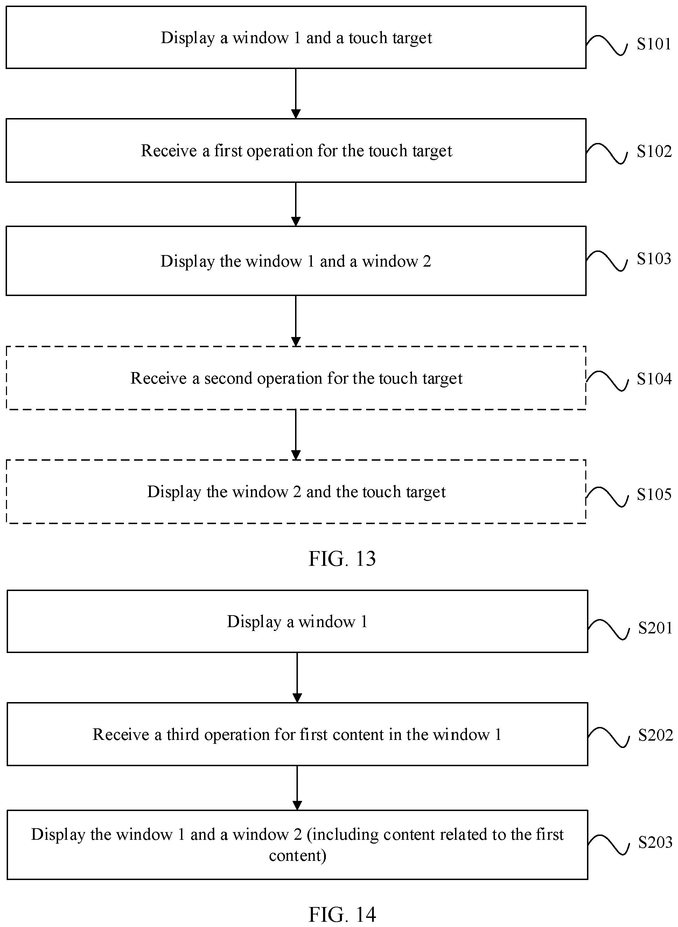

FIG. 13 is a schematic flowchart of a window display method according to this application. The method may include but is not limited to the following steps.

S101: An electronic device displays a window 1 and a touch target.

In an implementation, the electronic device displays an interface 1 of the application 1 (for example, a browser). The interface 1 includes the touch target and the window 1 of the application 1, the window 1 on the interface 1 is a foreground window, the touch target on the interface 1 is related to a window 2 of the application 1, and the interface 1 does not include the window 2. For a specific example, refer to the implementation shown in FIG. 3A, where the window 312 is the window 1, and the window 320 is the window 2.

In some examples, the window 1 and the window 2 include WebView (WebView) used to display web page content. When the electronic device displays WebView on a display, the web page content is displayed by using WebView. For example, the window 2 is draggable (draggable) Web View.

In some examples, the touch target may be used to listen to a user operation. In some examples, the touch target is a custom or preset control, like View (View) in a hypertext markup language (hypertext markup language, html).

In an implementation, before step S101, the electronic device may determine, in response to the user operation, to display the touch target. In an implementation, before step S101, the electronic device may determine a display mode of the touch target in response to the user operation, for example, but not limited to a display location and a display size. For a specific example, refer to the implementation shown in FIG. 3B.

In an implementation, display content of the window 2 related to the touch target is preset by the electronic device. In another implementation, the display content of the window 2 related to the touch target is related to display content of the window 1. For example, when the window 1 is used to display content of English literature, the window 2 is used to display a translation result related to the English literature. In another implementation, before step S101, the electronic device may determine, in response to the user operation, the display content of the window 2 related to the touch target. For a specific example, refer to the implementation shown in FIG. 3B.

S102: The electronic device receives a first operation for the touch target.

In an implementation, when displaying the interface 1, the electronic device receives the first operation for the touch target. A form of the first operation may include but is not limited to a touch operation, voice input, a motion posture (for example, a gesture), a brain wave, and the like. For example, the first operation includes dragging the touch target leftward or rightward.

S103: The electronic device displays the window 1 and the window 2.

In an implementation, the electronic device displays an interface 2 in response to the first operation for the touch target. The interface 2 includes the window 1 and the window 2, and optionally, the touch target. In some examples, the interface 2 includes a part or all of the window 1 and all of the window 2. In some examples, a display location of the touch target is adjacent to a display location of the window 2. In some examples, a display location (a location 1 for short) of the touch target on the interface 1 is different from a display location (a location 2 for short) of the touch target on the interface 2. In some examples, in a process in which the touch target moves from the location 1 to the location 2, a display area of the window 2 increases. In some examples, in the process in which the touch target moves from the location 1 to the location 2, a relative location of the window 2 and the touch target remains unchanged.

For a specific example of steps S101 to S103, refer to the implementation shown in FIG. 4A(A) to FIG. 4A(C). The user interface 310 shown in FIG. 4A(A) is the interface 1, the user interface 430 shown in FIG. 4A(C) is the interface 2, the window 312 is the window 1, the window 410 is the window 2, and the interface 2 includes a part of the window 1 and all of the window 2.

For a specific example of steps S101 to S103, refer to the implementation shown in FIG. 4B(A) to FIG. 4B(C). The user interface 460 shown in FIG. 4B(A) is the interface 1, the user interface 480 shown in FIG. 4B(B) is the interface 2, the window 462 is the window 1, the window 470 is the window 2, and the interface 2 includes all of the window 1 and all of the window 2.

In an implementation, the electronic device may calculate, based on location information in an event corresponding to the first operation, that a display location/display area of the window 2 is the area 1, and display the window 2 in the area 1 on the display. For example, the first operation is the touch operation, and the location information in the event corresponding to the first operation may be information about a touch location. In some examples, the electronic device may obtain the area 1 by invoking a method 1. The method 1 (for example, a function onHotAreaTouch()) is used to listen to the event corresponding to the first operation, and dynamically calculate the display position/display area of the window 2 based on the event. In some examples, the first operation is a drag/slide operation. The electronic device may calculate the real-time display area of the window 2 based on location information in the event corresponding to the real-time first operation, and update, in real time, an area that is of the display and that is used to display the window 2.

In an implementation, before receiving the first operation for the touch target, the electronic device may first receive a trigger operation for the touch target, and after receiving the trigger operation, the electronic device displays, in response to the first operation, the window 2. An example of a form of the trigger operation is similar to the example of the form of the first operation. For example, the trigger operation is a touch and hold operation. In some examples, the electronic device may invoke a method 2 to activate a function responding to the first operation. The method 2 (for example, a function onHotAreaLongClick()) is used to listen to the trigger operation, and activate, based on the trigger operation, the function responding to the first operation. For example, the first operation is a drag operation, and the function of responding to the first operation is a function dragging the touch target and/or the window 2.

In an implementation, the window 2 on the interface 2 is the foreground window. In some examples, the electronic device may update web page content displayed in the window 2 in response to a user operation for the window 2, for example, jump to another web page for display. In some examples, the first operation is the touch operation. When receiving the first operation, if it is detected that a finger of a user leaves the display, the electronic device may receive a corresponding event (referred to as an uplift event for short, for example, represented as (MotionEvent.ACTION_UP)). The electronic device may set the window 2 as the foreground window based on the uplift event.

In an implementation, the electronic device may include a web page layout tree, and the web page layout tree may include one or more windows. The electronic device may set any window in the web page layout tree to be displayed on top, to set the window as the foreground window, that is, a window set to be displayed on top in the web page layout tree is the foreground window of the electronic device. The electronic device does not display a window that does not belong to the web page layout tree. In some examples, after generating the window 2, the electronic device may add the window 2 to the web page layout tree. In step S101, when the electronic device displays the window 1 and does not display the window 2, the window 1 in the web page layout tree is set to be displayed on top. In step S103, in response to the first operation, the electronic device cancels the window 1 in the web page layout tree from being displayed on top, and sets the window 2 to be displayed on top. Therefore, the electronic device displays the window 1 and the window 2, and the window 2 is the foreground window. In some other examples, after the electronic device generates the window 2, in step S101, when the electronic device displays the window 1 and does not display the window 2, the window 1 in the web page layout tree is set to be displayed on top, and the web page layout tree does not include the window 2. In step S 103, in response to the first operation, the electronic device cancels the window 1 in the web page layout tree from being displayed on top, adds the window 2 to the web page layout tree, and sets the window 2 to be displayed on top. Therefore, the electronic device displays the window 1 and the window 2, and the window 2 is the foreground window.

In an implementation, the window 2 on the interface 2 is the foreground window. After step S103, the method further includes: The electronic device displays an interface 3 in response to a user operation for the window 1 on the interface 2, where the interface 3 includes the window 1 and the window 2, and the window 1 on the interface 3 is the foreground window. For a specific example, refer to the implementation shown in FIG. 5(A) and FIG. 5(B). In some examples, the electronic device may invoke a method 3 to switch the foreground window. The method 3 (for example, onTouch()) is used to listen to the trigger operation, and set the foreground window based on the trigger operation. For example, in response to the user operation for the window 1 on the interface 2, the electronic device invokes the method 3 to determine whether the window 1 is the foreground window. If the window 1 is not the foreground window, the window 1 is set as the foreground window.

In an implementation, after step S103, the method further includes: The electronic device displays an interface including the window 1 and the window 2 in response to a user operation (for example, the drag operation) for the touch target. A description of the interface is similar to that of the interface 2, and a difference lies in that proportions of display areas of the window 1 and the window 2 are different. For specific examples, refer to FIG. 4B(A) to FIG. 4B(C), FIG. 6(A) to FIG. 6(C), and FIG. 7(A) to FIG. 7(C).

S104: The electronic device receives a second operation for the touch target.

Step S104 is optional.

In an implementation, when displaying the interface 1 or the interface 2, the electronic device receives the second operation for the touch target, and an example of a form of the second operation is similar to the example of the form of the first operation.

S105: The electronic device displays the window 2 and the touch target.

Step S105 is optional.

In an implementation, the electronic device displays the interface 3 in response to the second operation (for example, including dragging the touch target leftward or rightward) for the touch target. The interface 3 includes the window 2 and the touch target, the interface 3 does not include the window 1, and the window 2 on the interface 3 is the foreground window. For a specific example, refer to the implementation shown in FIG. 6(A) to FIG. 6(C), where the window 312 is the window 1, and the window 410 is the window 2. In some examples, the electronic device may invoke the foregoing method 1 to calculate that the display area of the window 2 is a "full screen". Therefore, displaying the interface 3 is displaying the window 2 in "full screen".

In an implementation, the electronic device displays a full-screen control in response to the second operation (for example, a click operation or a double-click operation) for the touch target, and then displays the interface 3 in response to a user operation (for example, the click operation) for the full-screen control. The interface 3 includes the window 2 and the touch target, the interface 3 does not include the window 1, and the window 2 on the interface 3 is the foreground window. For a specific example, refer to the implementation shown in FIG. 8(A) and FIG. 8(B), where the window 312 is the window 1, and the window 410 is the window 2. In some examples, the electronic device may invoke a method 4 to display the full-screen control. The method 4 (for example, onHotAreaDoubleClick()) is used to listen to the trigger operation, and display the full-screen control and/or a hide control based on the trigger operation.

In an implementation, the touch target on the interface 3 is related to the window 1. In some examples, the electronic device may display the window 1 in response to the user operation for the touch target on the interface 3. A specific example is similar to that in steps S101 to S105. A difference lies in that in this case, the window 1 needs to be replaced with the window 2, and the window 2 needs to be replaced with the window 1.

This is not limited to steps S104 and S105 in the foregoing example. In another implementation, the electronic device displays the interface 1 in response to the second operation (for example, including dragging the touch target leftward or rightward) for the touch target. For a specific example, refer to the implementation shown in FIG. 7(A) to FIG. 7(C), where the window 312 is the window 1, and the window 410 is the window 2.

This is not limited to steps S104 and S105 in the foregoing example. In another implementation, the electronic device displays the hide control in response to the second operation (for example, the click operation or the double-click operation) for the touch target, and then displays the interface 1 in response to a user operation (for example, the click operation) for the hide control. For a specific example, refer to the implementation shown in FIG. 8(A) and FIG. 8(B).

In the foregoing method, the user may quickly call a window related to the touch target by operating the touch target, and adjust a size (including "full-screen" display and "hiding") of a display area of the window related to the touch target, so that the user can conveniently use the window related to the touch target. In addition, the user may quickly switch the foreground window by operating (for example, tapping) the window 1 or the window 2, and may operate the other window without closing one of the windows. After the operation is completed, the user may further quickly switch to a previous window, so that the user can conveniently and quickly use the two windows at the same time, thereby improving user experience.

FIG. 14 is a schematic flowchart of another window display method according to this application. The method may include but is not limited to the following steps.

S201: An electronic device displays a window 1.

In an implementation, the electronic device displays an interface 4 of an application 1 (for example, a browser), where the interface 4 includes the window 1 of the application 1 and does not include a window 2 of the application 1, and the window 1 on the interface 4 is a foreground window. For a specific example, refer to the implementation shown in FIG. 3A, where the window 312 is the window 1, and the window 320 is the window 2. For descriptions of the window 1 and the window 2, refer to the descriptions of the window 1 and the window 2 in step S101 in FIG. 13.

In an implementation, the interface 4 further includes a touch target, and the touch target on the interface 4 is related to the window 2. For a description of the touch target, refer to the description of the touch target in step S101 in FIG. 13.

S202: The electronic device receives a third operation for first content in the window 1.

In an implementation, when displaying the interface 4, the electronic device receives the third operation for the first content in the window 1. A form of the first content may be but is not limited to a text, an image, a link, or the like. An example of a form of the third operation is similar to the example of the form of the first operation in step S102 in FIG. 13.

S203: The electronic device displays the window 1 and the window 2 (including content related to the first content).

In an implementation, in response to the third operation for the first content, the electronic device obtains the content related to the first content, and displays an interface 5, where the interface 5 includes the window 1 and the window 2, and the window 2 on the interface 5 includes the content related to the first content. For a specific example, refer to the implementations shown in FIG. 9(A) to FIG. 12(B), where the window 312 is the window 1, and the window 320 is the window 2.

In an implementation, the electronic device displays a function menu in response to the third operation for the first content, where the function menu may include at least one function control for the first content. The electronic device may display the interface 5 in response to a function control 1 in the function menu. In some examples, the electronic device may invoke a method 5 to display the function menu. The method 5 (for example, onShowContextMenu()) is used to listen to a trigger operation, and display the function menu based on the trigger operation.

In some examples, the window 2 includes a result obtained through searching by using the first content as a search word. For a specific example, refer to the implementation shown in FIG. 9(A) to FIG. 9(C).

In some examples, the window 2 includes a translation result obtained by using the first content as to-be-translated content. For a specific example, refer to the implementation shown in FIG. 10(A) and FIG. 10(B).

In some examples, the window 2 includes content of a web page whose website address is a link corresponding to the first content. For a specific example, refer to the implementation shown in FIG. 11(A) and FIG. 11(B).

In some examples, the window 2 includes commodity information related to the first content. For a specific example, refer to the implementation shown in FIG. 12(A) and FIG. 12(B).

In some examples, the window 2 includes content related to location information and/or a place name obtained by recognizing the first content, for example, navigation content in which the location information and/or the place name are/is used as a destination, or ticket booking content in which the location information and/or the place name are/is used as a destination or a starting point.

This is not limited to the foregoing examples. In some other examples, the window 2 includes detailed information (for example, encyclopedia information) of a person/object obtained by recognizing the first content. This is not limited in this application.

In an implementation, the window 2 on the interface 5 is the foreground window. After step S203, the method further includes: The electronic device displays an interface 6 in response to a user operation for the window 1 on the interface 5, where the interface 6 includes all of the window 1 and all or a part of the window 2, and the window 1 on the interface 6 is the foreground window. For a specific example, refer to the implementation shown in FIG. 5(A) and FIG. 5(B).

In an implementation, the method further includes: When the electronic device displays the interface 4 or the interface 5, a size of a display area of the window 2 may be adjusted in response to a user operation for the touch target. A specific example is similar to descriptions of steps S104 and S105 in FIG. 13. The specific example is similar to that in FIG. 4B(A) to FIG. 4B(C), FIG. 6(A) to FIG. 6(C), and FIG. 7(A) to FIG. 7(C). Details are not described again.

This is not limited to the implementation shown in FIG. 14. In another implementation, the third operation may not be for the first content. For example, the third operation is for content related to the first content in the window 1. The third operation is not limited in this application.

In the foregoing method, the user may operate content in a current window to quickly call another window, and content related to the content is displayed by using the another window, so that the user can seamlessly switch to browse another related window when browsing the current window. In addition, the user may quickly switch the foreground window by operating (for example, tapping) the window 1 or the window 2, so that the user can conveniently and quickly use the two windows at the same time, thereby improving user experience.

All or a part of the method provided in embodiments of this application may be implemented by using software, hardware, firmware, or any combination thereof. When software is used for implementation, all or part of the implementation may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device like a server or a data center integrated with one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid-state disk, SSD)), or the like. In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A window display method, applied to an electronic device, wherein the method comprises:
displaying a first interface, wherein the first interface comprises a first window and a first control of a browser, and the first window is used to display a first web page;
receiving a first operation for the first control on the first interface; and
displaying a second interface, wherein the second interface comprises a second window of the browser and all or a part of the first window, the second window is used to display a second web page, and the second web page is a preset web page or a web page related to the first web page.

2. The method according to claim 1, wherein the second interface further comprises the first control, the second window is associated with the first control, the second window is adjacent to the first control, and a display location of the first control on the first interface is different from a display location of the first control on the second interface.

3. The method according to claim 1 or 2, wherein the second interface further comprises the first control, the first control on the first interface is displayed on a first location, the first control on the second interface is displayed on a second location, and in a process in which the first control moves from the first location to the second location, an area of the second window increases.

4. The method according to any one of claims 1 to 3, wherein the second interface comprises the second window and the part of the first window, and the method further comprises:
receiving a second operation for the first window on the second interface;
displaying a third interface, wherein the third interface comprises all of the first window and a part of the second window;
receiving a third operation for the second window on the third interface; and
displaying the second interface.

5. The method according to any one of claims 1 to 3, wherein the second interface comprises all of the first window and the second window, and the first window and the second window are displayed on split screens on the second interface.

6. The method according to any one of claims 1 to 5, wherein the second interface further comprises the first control, and the method further comprises:
receiving a fourth operation for the first control on the second interface; and
displaying a fourth interface, wherein the fourth interface comprises the first window, the second window, and the first control, the display location of the first control on the second interface is different from a display location of the first control on the fourth interface, and a display area of the second window on the second interface is different from a display area of the second window on the fourth interface.

7. The method according to any one of claims 1 to 6, wherein the second interface further comprises the first control, and the method further comprises:
receiving a fifth operation for the first control on the second interface; and
displaying a fifth interface, wherein the fifth interface comprises the second window but does not comprise the first window.

8. The method according to claim 7, wherein when displaying the fifth interface, the electronic device runs the first window in the background.

9. The method according to claim 7 or 8, wherein the fifth operation comprises dragging the first control to an edge of a display of the electronic device, the fifth interface further comprises the second control, the second control on the fifth interface is displayed at the edge of the display, and the second control is associated with the first window.

10. The method according to claim 7 or 8, wherein the displaying a fifth interface comprises:
in response to the fifth operation, displaying a third control, wherein the third control is associated with the second window;
receiving a sixth operation for the third control; and
displaying the fifth interface.

11. The method according to any one of claims 7 to 10, wherein the fifth interface further comprises the second control, the second control is associated with the first window, and the method further comprises:
receiving a seventh operation for the second control on the fifth interface; and
displaying a sixth interface, wherein the sixth interface comprises the first window and all or the part of the second window.

12. The method according to any one of claims 1 to 11, wherein the method further comprises:
receiving an eighth operation for the first control on the second interface; and
displaying the first interface.

13. The method according to any one of claims 1 to 12, wherein the method further comprises:
receiving a ninth operation for the first interface, wherein the first interface comprises first information; and
displaying a seventh interface, wherein the seventh interface comprises a third window of the browser and all or the part of the first window, the third window is used to display a third web page, and the third web page is a web page related to the first information.

14. The method according to claim 13, wherein the third web page comprises a result obtained through searching by using the first information as a keyword; the third web page comprises a result obtained by translating the first information; a website address of the third web page is a website address corresponding to the first information; the third web page comprises commodity information related to the first information; or the third web page comprises information related to the first location and the first location is determined based on the first information.

15. An electronic device, comprising a transceiver, a processor, and a memory, wherein the memory is configured to store a computer program, and the processor invokes the computer program, to perform the method according to any one of claims 1 to 14.

16. A computer storage medium, wherein the computer storage medium stores a computer program, and when the computer program is executed by a processor, the method according to any one of claims 1 to 14 is implemented.
